(19) Europäisches Patentamt / European Patent Office / Office européen des brevets

(11) **EP 3 739 960 A1**

(12) **EUROPEAN PATENT APPLICATION**
published in accordance with Art. 153(4) EPC

(43) Date of publication:
**18.11.2020 Bulletin 2020/47**

(51) Int Cl.:
**H04W 48/08** (2009.01)   **H04L 12/70** (2013.01)
**H04W 48/18** (2009.01)   **H04W 52/30** (2009.01)

(21) Application number: **18900344.5**

(22) Date of filing: **07.12.2018**

(86) International application number:
**PCT/JP2018/045177**

(87) International publication number:
**WO 2019/138753 (18.07.2019 Gazette 2019/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.01.2018   JP 2018002845**

(71) Applicant: **Sony Corporation**
**108-0075 Tokyo (JP)**

(72) Inventor: **TAKANO, Hiroaki**
**Tokyo 108-0075 (JP)**

(74) Representative: **Witte, Weller & Partner**
**Patentanwälte mbB**
**Postfach 10 54 62**
**70047 Stuttgart (DE)**

(54) **BASE STATION, TERMINAL DEVICE, METHOD AND RECORDING MEDIUM**

(57)   [Problem] To provide a configuration capable of performing communication with slice isolation taken into consideration.

[Solution] A base station configured to provide a plurality of slices includes a control unit configured to transmit, to a terminal device, capability information related to provision of a slice having assured isolation.

## FIG.1

**Description**

Field

The present disclosure relates to a base station, a terminal device, a method, and a recording medium.

Background

Radio access schemes and wireless networks (hereinafter also referred to as "Long Term Evolution (LTE)", "LTE-Advanced (LTE-A)", "LTE-Advanced Pro (LTE-A Pro)", "New Radio (NR)", "New Radio Access Technology (NRAT)", "5G", "Evolved Universal Terrestrial Radio Access (EUTRA)", or "Further EUTRA (FEUTRA)") of cellular mobile communications have been discussed at 3rd Generation Partnership Project (3GPP). In the following description, LTE includes LTE-A, LTE-A Pro, and EUTRA, and NR includes NRAT and FEUTRA. In LTE, a base station device (base station) is also referred to as eNodeB (evolved NodeB); in NR, a base station device (base station) is also referred to as gNodeB; and in LTE and NR, a terminal device (mobile station, mobile station device, terminal) is also referred to as user equipment (UE). LTE and NR are cellular communication systems in which areas covered by base station devices are disposed as a plurality of cells. One base station device may manage a plurality of cells.
NR is a radio access scheme of the next generation to LTE and is a radio access technology (RAT) different from LTE. NR is an access technology compatible with various use cases including eMBB (enhanced mobile broadband), massive machine type communications (mMTC), and ultra-reliable and low latency communications (URLLC). NR is developed toward a technology framework compatible with use scenarios, request conditions, disposition scenarios, and the like in these use cases.
For example, a slicing technology for accommodating a plurality of communication forms corresponding to various use cases in one network has been developed in NR. With the slicing technology, logical networks called slices (also referred to as network slices) can coexist in one physical network. As for the slicing technology, a technology of dynamically allocating radio resources available for a base station to a plurality of slices is disclosed in, for example, Patent Literature 1.

Citation List

Patent Literature

Patent Literature 1: JP 2017-200172 A

Summary

Technical Problem

It is desirable that slices can be handled by a terminal device in a manner same as that for existing physical networks. Isolation between networks is an example of the handling. In the technology disclosed in Patent Literature 1 above, no measures are provided for slice isolation, and thus, when using a slice, the terminal device is potentially affected by another slice.
Thus, the present disclosure provides a configuration capable of performing communication with slice isolation taken into consideration.

Solution to Problem

According to the present disclosure, a base station configured to provide a plurality of slices is provided that includes a control unit configured to transmit, to a terminal device, capability information related to provision of a slice having assured isolation.
Moreover, according to the present disclosure, a terminal device is provided that includes a control unit that requests a base station to provide a slice having assured isolation, the base station being configured to provide a plurality of slices.
Moreover, according to the present disclosure, a method executed by a base station configured to provide a plurality of slices is provided that includes transmitting, to a terminal device, capability information related to provision of a slice having assured isolation.
Moreover, according to the present disclosure, a method executed by a processor is provided that includes requesting a base station to provide a slice having assured isolation, the base station being configured to provide a plurality of slices.

Moreover, according to the present disclosure, a recording medium is provided in which a computer program for causing a computer to function as a control unit configured to transmit, to a terminal device, capability information related to provision of a slice having assured isolation is recorded, the computer being configured to control a base station configured to provide a plurality of slices.

Moreover, according to the present disclosure, a recording medium is provided in which a computer program for causing a computer to function as a control unit configured to request a base station to provide a slice having assured isolation is recorded, the base station being configured to provide a plurality of slices.

Advantageous Effects of Invention

According to the present disclosure as described above, a configuration capable of performing communication with slice isolation taken into consideration is provided. The above-described effect is not necessarily restrictive, but any effect indicated in the present specification or any other effect that could be understood from the present specification may be achieved together with or in place of the above-described effect.

Brief Description of Drawings

FIG. 1 is a diagram illustrating an exemplary entire configuration of a system according to an embodiment of the present disclosure.

FIG. 2 is a diagram schematically illustrating an LTE network configuration.

FIG. 3 is a diagram schematically illustrating an NR network configuration.

FIG. 4 is a diagram for description of an overview of slicing technology.

FIG. 5 is a diagram for description of exemplary slice provision by the system according to the present embodiment.

FIG. 6 is a diagram illustrating an exemplary relation between a bearer and a slice.

FIG. 7 is a diagram illustrating a frame configuration when a sub carrier spacing in NR is 15 kHz.

FIG. 8 is a diagram illustrating a frame configuration when the sub carrier spacing in the NR is 30 kHz.

FIG. 9 is a block diagram illustrating an exemplary configuration of a base station according to the present embodiment.

FIG. 10 is a block diagram illustrating an exemplary configuration of a terminal device according to the present embodiment.

FIG. 11 is a sequence diagram illustrating an exemplary procedure for slice provision executed in the system according to the present embodiment.

FIG. 12 is a diagram for description of a first example of radio resource allocation to slices according to the present embodiment.

FIG. 13 is a diagram for description of the first example of radio resource allocation to slices according to the present embodiment.

FIG. 14 is a diagram for description of an exemplary adjustment rule when a sub frame scheduled to be allocated is duplicated.

FIG. 15 is a diagram for description of a second example of radio resource allocation to slices according to the present embodiment.

FIG. 16 is a diagram for description of exemplary switching between schedules of radio resource allocation to slices according to the present embodiment.

FIG. 17 is a sequence diagram illustrating an exemplary procedure for slice provision executed in the system according to the present embodiment.

FIG. 18 is a diagram for description of exemplary maximum transmission power set for each slice according to the present embodiment.

FIG. 19 is a sequence diagram illustrating an exemplary procedure related to reporting of first residual transmission power and determination of new slice use permission and executed in the system according to the present embodiment.

FIG. 20 is a sequence diagram illustrating an exemplary procedure related to reporting of second residual transmission power and executed in the system according to the present embodiment.

FIG. 21 is a diagram for description of a configuration for achieving coexistence of slices having assured isolation in the region of electrical power and slices not having assured isolation in the region of electrical power.

FIG. 22 is a block diagram illustrating a first exemplary schematic configuration of eNB.

FIG. 23 is a block diagram illustrating a second exemplary schematic configuration of eNB.

FIG. 24 is a block diagram illustrating an exemplary schematic configuration of a smartphone.

FIG. 25 is a block diagram illustrating an exemplary schematic configuration of a car navigation device.

Description of Embodiments

Preferable embodiments of the present disclosure will be described below in detail with reference to the accompanying drawings. In the present specification and drawings, any components having functional configurations identical to each other in effect are denoted by an identical reference sign, and duplicate description thereof will be omitted.

The description is performed in the following order.

1. Introduction
1.1. Exemplary system configuration
1.2. Discussion
2. Exemplary configurations of devices
2.1. Configuration of base station
2.2. Configuration of terminal device
3. Technical characteristics
3.1. First technical characteristic
3.1.1. Technical problem
3.1.2. Technical characteristic
3.2. Second technical characteristic
3.2.1. Technical problem
3.2.2. Technical characteristic
3.3. Third technical characteristic
3.3.1. Technical problem
3.3.2. Technical characteristic
3.4. Fourth technical characteristic
3.4.1. Technical problem
3.4.2. Technical characteristic
3.5. Fifth technical characteristic
3.5.1. Technical problem
3.5.2. Technical characteristic
4. Exemplary applications
5. Conclusion

<<1. Introduction>>

<1.1. Exemplary system configuration>

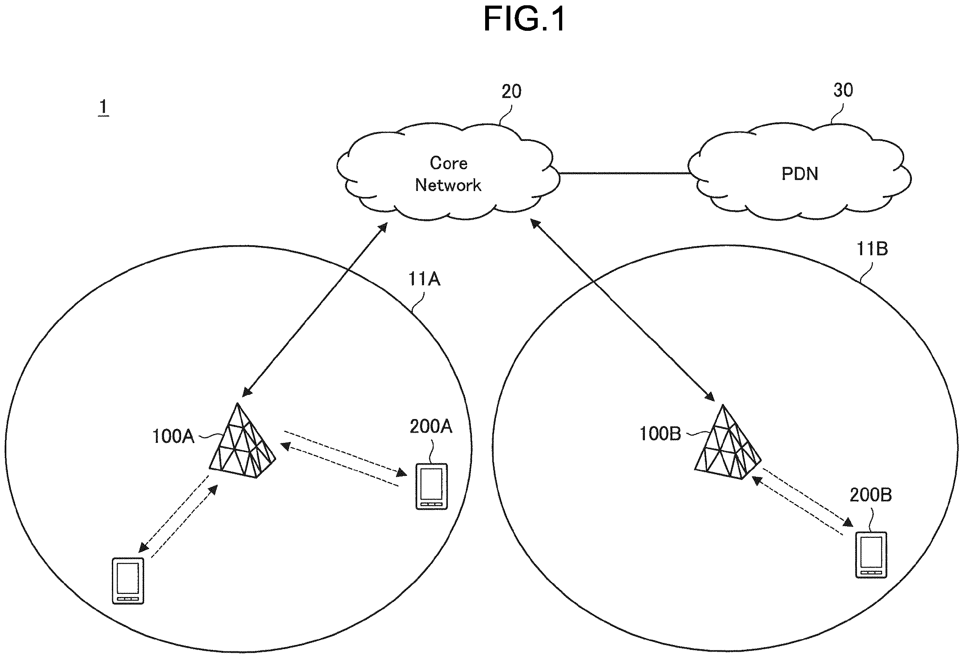

FIG. 1 is a diagram illustrating an exemplary entire configuration of a system 1 according to an embodiment of the present disclosure. As illustrated in FIG. 1, the system 1 includes base stations 100 (100A and 100B), terminal devices 200 (200A and 200B), a core network 20, and a packet data network (PDN) 30.

Each base station 100 operates a cell 11 (11A or 11B) and provides radio service to one or more terminal devices positioned inside the cell 11. For example, the base station 100A provides radio service to the terminal device 200A, and the base station 100B provides radio service to the terminal device 200B. The cell 11 may be operated in accordance with, for example, an optional radio communication scheme such as LTE or NR (New Radio). The base station 100 is connected with the core network 20. The core network 20 is connected with the PDN 30.

The core network 20 may include a mobility management entity (MME), a serving gateway (S-GW), a PDN gateway (P-GW), a policy and charging rule function (PCRF), and a home subscriber server (HSS). Alternatively, the core network 20 may include an NR entity having a function same as those of these entities. The MME is a control node configured to handle signals on a control plane, and manages the movement state of the terminal device. The S-GW is a control node configured to handle signals on a user plane and is a gateway device configured to switch the forwarding path of user data. The P-GW is a control node configured to handle signals on the user plane and is a gateway device as a connection point between the core network 20 and the PDN 30. The PCRF is a control node configured to perform control related to policies of the quality of service (QoS) and the like and charging for bearers. The HSS is a control node configured to handle subscriber data and perform service control.

Each terminal device 200 performs radio communication with the base station 100 based on control by the base station 100. The terminal device 200 may be what is called a user equipment (UE). For example, the terminal device 200 transmits an uplink signal to the base station 100 and receives a downlink signal from the base station 100.

<1.2. Discussion>

(1) Overview of slices

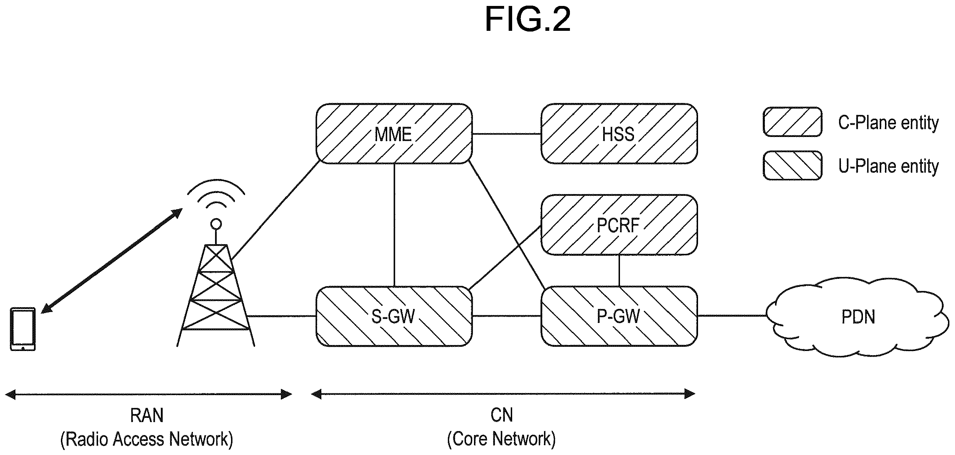

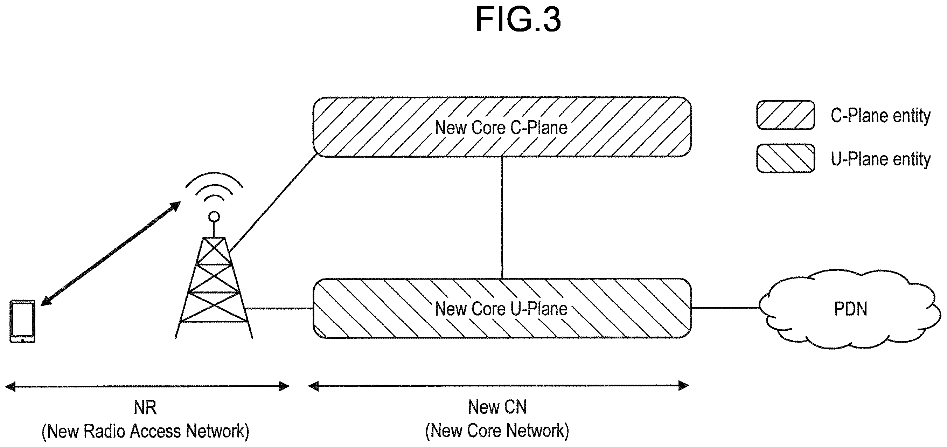

The following first describes LTE and NR as a successor of the LTE, which are discussed at 3GPP, with reference to FIGS. 2 and 3.

FIG. 2 is a diagram schematically illustrating an LTE network configuration. As illustrated in FIG. 2, the LTE network configuration is classified into a RAN and a CN. The CN may include, for example, a mobility management entity (MME), a serving gateway (S-GW), a PDN gateway (P-GW), a policy and charging rule function (PCRF), and a home subscriber server (HSS). Among these, the MME, the HSS, and the PCRF are entities on the control plane (C-Plane), and the S-GW and the P-GW are entities on the user plane (U-Plane). The following describes each entity in detail. The MME is a control node configured to handle signals on the control plane and manages the movement state of a terminal device. The S-GW is a control node configured to handle signals on the user plane and is a gateway device configured to switch the forwarding path of user data. The P-GW is a control node configured to handle signals on the user plane and is a gateway device as a connection point between the core network 20 and the PDN 30. The PCRF is a control node configured to perform control related to policies of the quality of service (QoS) and the like and charging for bearers. The HSS is a control node configured to handle subscriber data and perform service control.

FIG. 3 is a diagram schematically illustrating an NR network configuration. As illustrated in FIG. 3, the NR network configuration is classified into an NR and a New CN. The New CN includes a New Core C-Plane on which processing related to the control plane is performed and a New Core U-Plane on which processing related to the user plane is performed.

The NR has two characteristics. The first characteristic is to achieve high-speed and large-capacity communication by using the frequency band of 6 GHz to 100 GHz. The second characteristic is to efficiently accommodate a plurality of communication forms for various use cases. The plurality of communication forms include high-speed and large-capacity communication (mobile broad band), low-latency communication (low latency), machine type communication (MTC), device-to-device (D2D) communication, and the like. Accommodation of these plurality of communication forms in one network has been discussed in the NR.

In the LTE, an evolved packet core (EPC) has been employed as a technology on the core network side connected with the RAN, and New Core is discussed as its successor. The New Core is desired to efficiently accommodate the above-described plurality of communication forms and lower capital expenditure/operating expense (CAPEX/OPEX).

When a plurality of communication forms are to be provided while the CAPEX/OPEX is kept low, it is difficult to physically divide a network for each communication form. Thus, it is discussed to operate a plurality of logical networks corresponding to a plurality of communication forms in one physical network and to flexibly change the capacity of each logical network in accordance with demand for the amount of communication for each communication form.

This can be achieved by implementing each node (in other words, communication facility) of the core network as a virtual machine and virtually executing, for each logical network, node operation in accordance with a target communication form. This is because the number of functions implemented by the virtual machine can be increased and decreased in accordance with increase and decrease of communication demand, and the amount of calculator resources allocated to each function can be increased and decreased. The functions implemented by the virtual machine are connected with other functions to form a network by a virtual network technology. Such a virtual network technology is, for example, a technology called Open Flow that a central controller distributes rules for switches and the switches operate in accordance with the rules distributed by the controller. According to Open Flow, flexible network operation is achieved by freely switching a switch configured to connect between functions implemented by the virtual machine.

A virtual machine technology is a technology of operating one or more logical machines (in other words, virtual machines) in a physical server. By using the virtual machine technology, the physical server can provide functions different from each other to virtual machines, or can operate a plurality of virtual machines having the same function to distribute a processing load.

As described above, the technology of providing logical networks (in other words, pipes for communication) having properties different from each other by combining virtual machines and a virtual network technology such as Open Flow is also referred to as slicing. A virtual network is a technology of virtually achieving a network connecting virtual machines.

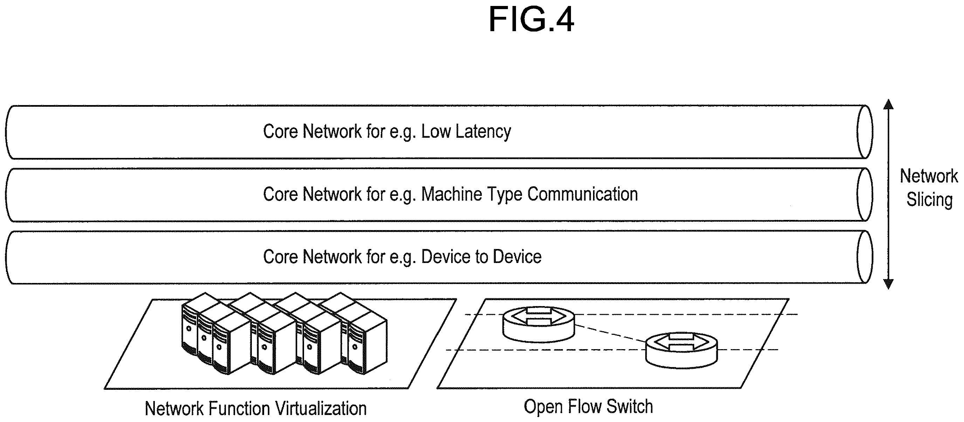

FIG. 4 is a diagram for description of an overview of the slicing technology. As illustrated in FIG. 4, a core network for low-latency communication, a core network for MTC, and a core network for D2D are achieved on one physical network by combining virtual machines and Open Flow switches. In other words, logically independent networks capable of providing communication services different from each other are achieved on one physical network. A logical network provided in the slicing technology is also referred to as a slice or a network slice. According to the slicing technology, logical networks for usages different from each other can be flexibly provided. In addition, according to the slicing technology, the capacity of each slice can be flexibly changed by increasing and decreasing calculation resources allocated to virtual machines and by changing switching.

The slicing technology is desirably employed in a cellular network when a request for the New Core such as efficient accommodation of a plurality of forms of communication while the CAPEX/OPEX is kept low is considered.

The cellular network includes the RAN and the CN. The slicing technology is thought to be more easily applicable mainly to the CN side. This is because, in the LTE, various nodes such as the MME, the P-GW, the S-GW, and the PCRF are on the CN side, but only a base station is on the RAN side. However, the slicing technology is desirably applied on the RAN side as well so that one base station can provide radio services compatible with various communication forms by using a finite frequency band and flexibly change the amount of communication resources for each communication form.

The quality of service (QoS), which guarantees the quality of communication on a network, is a concept seemingly similar to a slice. However, the QoS only controls a delay time and a communication band. Comparatively, the slice not only can control the delay time and the communication band. For example, signaling such as an attach procedure may differ between slices different from each other. In addition, a network access method may differ between slices different from each other. Accordingly, the slice can control the delay time and the communication band while providing unique signaling and access methods. Thus, the QoS can be regarded as a slice subset that can provide some of functions provided by the slice.

(2) Slice provided by system

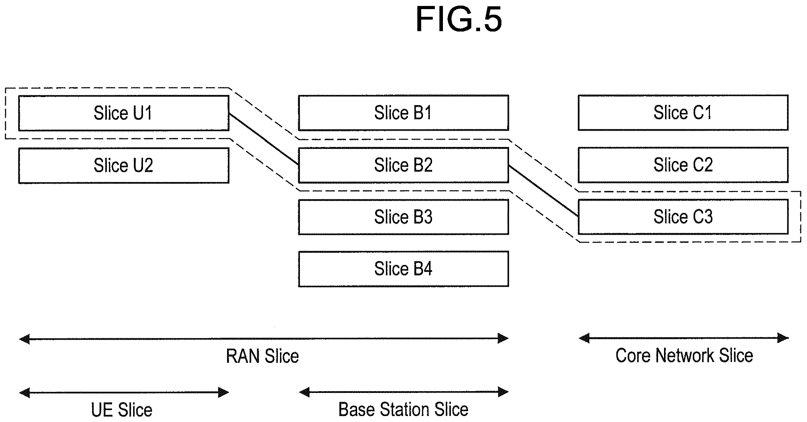

The base station 100, the terminal device 200, and the CN 20 according to the present embodiment can each provide one or more logical networks that provide communication services different from each other. In other words, the base station 100, the terminal device 200, and the CN 20 can each provide one or more slices. This point will be described below with reference to FIG. 5.

FIG. 5 is a diagram for description of exemplary slice provision by a system according to the present embodiment. As illustrated in FIG. 5, for example, the terminal device 200 provides slices U1 and U2, the base station 100 provides slices B1 to B4, and the CN 20 provides slices C1 to C3. Typically, it is thought that the slicing technology is applied on the CN and slices are provided in the CN. However, in the present embodiment, as illustrated in FIG. 5, slices are provided on the RAN side as well, and in addition, and slices are provided by each of the base station 100 and the terminal device 200.

Slices provided at each of the base station 100, the terminal device 200, and the CN 20 are associated with one another to form an end-to-end slice from the terminal device 200 to the CN 20. In the example illustrated in FIG. 5, the slices U1, B2, and C3 are associated with one another to form an end-to-end slice. An agent that associates slices is optional. For example, a control entity in the CN 20 associates slices. Such a control entity is also referred to as a slicing management entity. The slicing management entity associates slices in accordance with a request from the terminal device 200 or in accordance with the resource status of slices provided by the CN 20.

Thus, each of the base station 100, the terminal device 200, and the CN 20 desirably provides information related to slices that can be provided by the device. When a technology related to slices is provided, the terminal device 200 can connect to a desired slice by requesting for attach based on recognition of the kind of a slice provided from a network side, the state (for example, congestion degree) of the slice, and the like. Information related to a slice may be regarded as capability information indicating capability related to the slice.

The following describes the slice capability.

• Capabilities of slice provided by CN 20

The CN 20 can provide one or more slices. Exemplary slices of the CN 20 include a low-latency slice and an MTC slice. The low-latency slice is a network in which the number of switches to be passed through is small and calculator resources are sufficiently allocated so that processing delay is reduced. The MTC slice is a network in which a larger amount of calculator resources to processing on the control plane than to processing on the user plane are allocated. Accordingly, the MTC slice is suitable for a communication form in which the number of accommodated terminals is small and the amount of data transmitted at once is small. Other exemplary slices of the CN 20 include a slice compatible with the EPC and a slice compatible with the NR.

Exemplary capabilities of a slice provided by the CN 20 include the number of switches, the amount of calculator resources, whether the slice is compatible with the EPC, and whether the slice is compatible with the NR.

• Capabilities of slice provided by base station 100

The base station 100 can provide one or more slices. The base station 100 can simultaneously operate a plurality of component carriers by using a carrier aggregation technology. Which frequency and time slot are used for MTC, high-speed and large-capacity communication, or low-latency communication among the plurality of component carriers largely depends resource scheduling by the base station 100. Thus, in terms of resource allocation, the slicing and the scheduling are seemingly similar to each other. However, the scheduling has difficulties in, for example, setting of a parameter such as the number of accommodated terminals in MTC, and is similar to but different from the slicing.
Exemplary capabilities of a slice provided by the base station 100 include the amount of resources that can be provided for low-latency communication and the amount of delay in this case. Other exemplary capabilities of a slice provided by the base station 100 include the number of terminals that can be accommodated in the case of a communication form such as MTC in which a large number of terminals simultaneously connect to a network.

• Capabilities of slice provided by terminal device 200

The terminal device 200 can provide one or more slices. In other words, the terminal device 200 can perform processing compatible with one or more communication forms. For example, the terminal device 200 can provide an MTC slice when a protocol for handling MTC is implemented.
This is same for another communication form such as low-latency communication.
Exemplary capabilities of a slice of a provided by the terminal device 200 include a communication form (such as MTC or low-latency communication) with which processing that can be performed is compatible, in other words, a communication form with which the slice that can be provided is compatible.

(3) Relation between bearer and slice

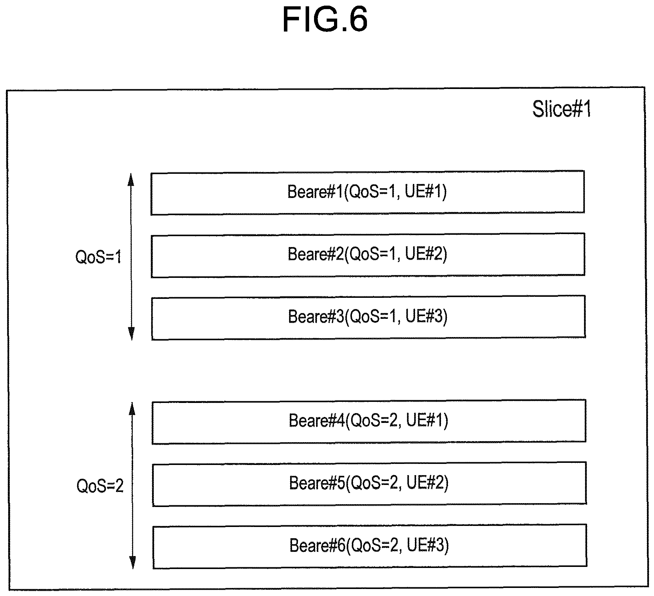

In the RAN and the EPC in the LTE, a session referred to as a bearer is generated for each QoS, and a different bearer is prepared for a different QoS. The terminal device first generates a default bearer and then generates a dedicated bearer compatible with a necessary QoS, thereby performing communication. The bearer generation needs a large number of transactions involving the terminal device, the base station, the MME, the S-GW, the P-GW, and the PCRF, and thus causes delay and the like. However, one slice can provide a plurality of QoSs and thus can reduce delay and the like. This point will be described below with reference to FIG. 6.
FIG. 6 is a diagram illustrating an exemplary relation between a bearer and a slice. As illustrated in FIG. 6, one slice (#1) includes a plurality of bearers (#1 to #6). In FIG. 6, the bearers #1 to #3 are bearers for which the QoS value is "1", and the bearers #4 to #6 are bearers for which the QoS value is "2". The bearers #1 and #4 are bearers for a UE #1, the bearers #2 and #5 are bearers for a UE #2, and the bearers #3 and #6 are bearers for a UE #3. In this manner, one slice may include a plurality of QoS bearers for a plurality of terminal devices 200. Thus, the plurality of terminal devices 200 can perform, through the one slice, communication using the plurality of QoS bearers.

(4) Frame configuration of NR

In the NR, similarly to the LTE, one radio frame includes 10 sub frames (#0 to #9), the time length of each sub frame is 1 msec, and the time length of one radio frame is 10 msec.
However, in the NR, unlike the LTE, one sub frame includes one or more slots, and the number of slots included in one sub frame changes in accordance with a sub carrier spacing.
In addition, in the NR, a component carrier may include a plurality of bandwidth parts. In this case, a different sub carrier spacing can be set for each bandwidth part. Thus, the number of slots included in one sub frame may differ between bandwidth parts. According to the NR standard specification under discussion, the correspondence relation between the sub carrier spacing and the slot setting is defined as in Table 1 below.

Table 1. Standard Specification for Slot in NR

| (based on 3GPP Draft TS38.211) | | | |
| --- | --- | --- | --- |
| Sub carrier spacing | The number of OFDM symbols included in one slot | The number of slots included in one radio frame | The number of slots included in one sub frame |
| 15 kHz | 14 | 10 | 1 |
| 30 kHz | 14 | 20 | 2 |

(continued)

| (based on 3GPP Draft TS38.211) | | | |
|---|---|---|---|
| Sub carrier spacing | The number of OFDM symbols included in one slot | The number of slots included in one radio frame | The number of slots included in one sub frame |
| 60 kHz | 14 | 40 | 4 |
| 120 kHz | 14 | 80 | 8 |
| 240 kHz | 14 | 160 | 16 |
| 480 kHz | 14 | 320 | 32 |

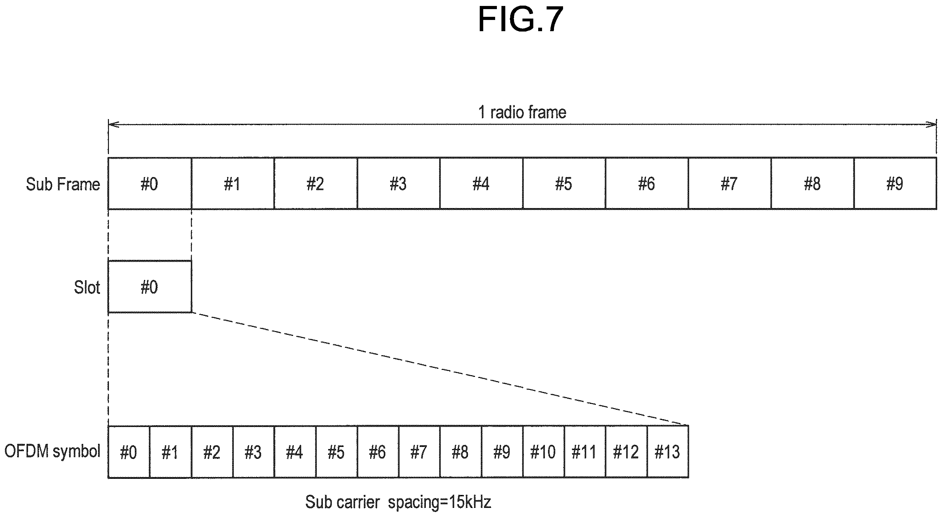

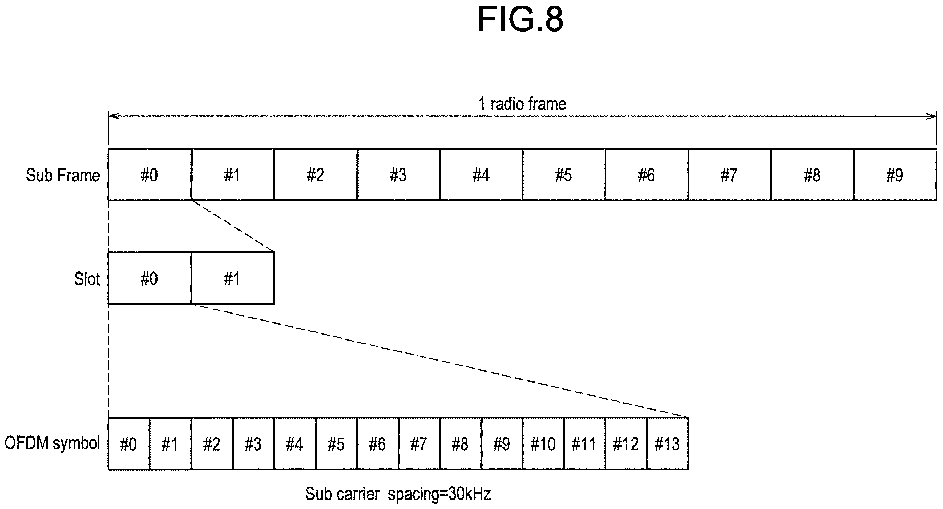

Table 1 is a table listing, for each sub carrier spacing, the number of orthogonal frequency division multiplexing (OFDM) symbols included in one slot, the number of slots included in one radio frame, and the number of slots included in one sub frame. As indicated in Table 1, the number of OFDM symbols included in one slot is constant irrespective of the sub carrier spacing. However, the number of slots included in one sub frame increases as the sub carrier spacing increases, and as a result, the number of slots included in one radio frame increases as the sub carrier spacing increases. The following describes, as an example, a frame configuration based on the table indicated in Table 1 with reference to FIGS. 7 and 8.

FIG. 7 is a diagram illustrating the frame configuration when the sub carrier spacing in the NR is 15 kHz. As illustrated in FIG. 7, one radio frame includes 10 sub frames (#0 to #9). Each sub frame (#0) includes one slot (#0), and as a result, one radio frame includes 10 slots. Each slot (#0) includes 14 OFDM symbols (#0 to #13).

FIG. 8 is a diagram illustrating the frame configuration when the sub carrier spacing in the NR is 30 kHz. As illustrated in FIG. 8, one radio frame includes 10 sub frames (#0 to #9). Each sub frame (#0) includes two slots (#0 and #1), and as a result, one radio frame includes 20 slots. Each slot (#0) includes 14 OFDM symbols (#0 to #13).

The sub carrier spacing may be flexibly set in accordance with a use case. For example, the sub carrier spacing is set to be large in a use case in which low latency is requested. Accordingly, a time per slot is short, and thus low latency is achieved.

The sub carrier spacing is statically or quasi-statically set and expected not to be frequently switched.

(5) Slice isolation

Isolation is desirably assured for a slice. Definition of the isolation of a slice is such that traffic in the slice does not affect traffic in another slice and is not affected by traffic in the other slice. When the isolation of a slice is assured, communication using the slice is not affected by a dynamic event in another slice. As for a slice of the RAN, when the isolation of the slice is assured, radio resources allocated to the slice and transmission opportunity are not affected by another slice.

In a slice having assured isolation, communication completely independent from another slice is performed. For example, in one slice, the base station 100 transmits a downlink signal, and the terminal device 200 transmits an uplink control signal such as ACK/NACK for the received downlink signal.

A plurality of slices are basically networks different from each other, and thus isolation is desirably assured for each slice. However, a slice not having assured isolation is potentially provided. For example, when slices of the RAN are provided through one shared channel, it is difficult to provide a slice having assured isolation in some cases. In the RAN as well, slice isolation is desirably assured.

The isolation of a slice of the CN 20 can be assured, for example, by using a multi-protocol label switch (MPLS) that has been used to achieve a virtual private network (VPN). The MPLS is a packet forwarding technology using a tag called a label. A switch compatible with the MPLS performs routing of a packet by referring to a label applied to the packet. Accordingly, for each VPN, a path in the network can be explicitly specified. Similarly, a plurality of logical networks can be virtually disposed in one physical network by applying a label passing through a different path for each slice. However, since networks not physically separated from each other are used, the isolation of each slice can be assured by performing control to guarantee a band between VPNs of respective slices.

The RAN is a radio communication interval and different from the CN 20 in which a large number of switches are disposed. Thus, a technology other than the MPLS is desirably applied to assure slice isolation in the radio communication interval of the RAN.

(6) Isolation between uplink (UL) and downlink (DL)

Examples of wired Ethernet (registered trademark) cables (Ethernet cables) that can be used in the CN 20 include a coaxial cable, a UTP cable, a STP cable, and an optical fiber. In the case of communication using these Ethernet cables, an UL and a DL are completely separated from each other by performing full-duplex communication.

In the RAN, when a frequency duplex mode (FDD) is employed, frequency bands different from each other are used for the UL and the DL. However, when communication using a time duplex mode (TDD) is performed, the same frequency band is used for the UL and the DL at times different from each other. In the TDD, the configuration of a link direction per sub frame is changed in accordance with variation in UL traffic and DL traffic handled by the base station 100. Thus, when the ratio of UL/DL is dynamically changed in the TDD, an UL slice and a DL slice affect each other, which makes it difficult to assure isolation.

<<2. Exemplary configurations of devices>>

<2.1. Configuration of base station>

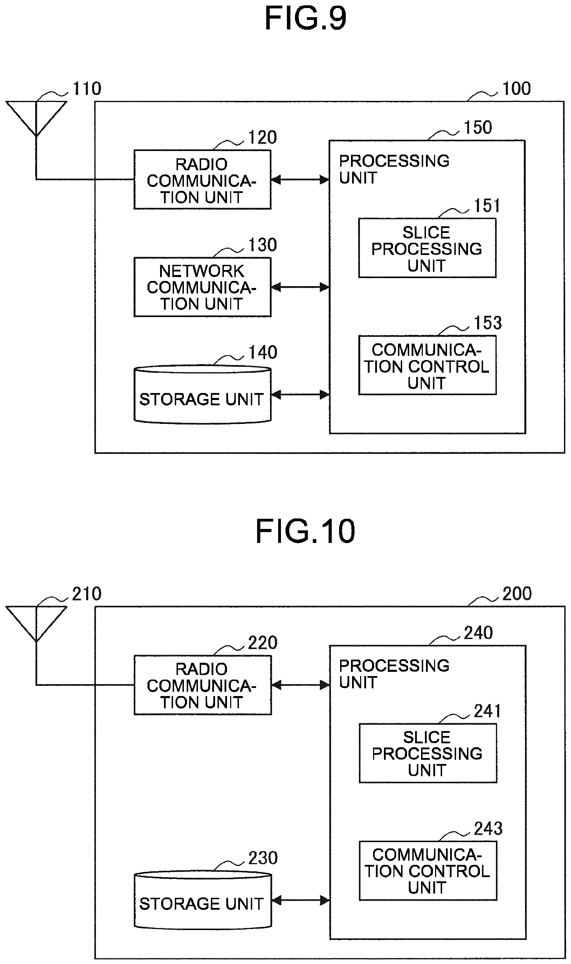

The following first describes an exemplary configuration of the base station 100 according to the present embodiment with reference to FIG. 9. FIG. 9 is a block diagram illustrating the exemplary configuration of the base station 100 according to the present embodiment. As illustrated in FIG. 9, the base station 100 includes an antenna unit 110, a radio communication unit 120, a network communication unit 130, a storage unit 140, and a processing unit 150.

(1) Antenna unit 110

The antenna unit 110 radiates, as radio wave into space, a signal output by the radio communication unit 120. In addition, the antenna unit 110 converts radio wave in space into a signal and outputs the signal to the radio communication unit 120.

(2) Radio communication unit 120

The radio communication unit 120 transmits and receives signals. For example, the radio communication unit 120 transmits a downlink signal to the terminal device and receives an uplink signal from the terminal device.

(3) Network communication unit 130

The network communication unit 130 transmits and receives information. For example, the network communication unit 130 transmits information to another node and receives information from the other node. Examples of the other node include another base station 100 and a control device 300.

(4) Storage unit 140

The storage unit 140 stores temporarily or permanently computer programs and various kinds of data for operation of the base station 100.

(5) Processing unit 150

The processing unit 150 provides various functions of the base station 100. The processing unit 150 includes a slice processing unit 151 and a communication control unit 153. The slice processing unit 151 has a function to perform various kinds of processing related to a slice provided to the terminal device 200. For example, the slice processing unit 151 determines whether to allow use of a slice by the terminal device 200, provides, to the terminal device 200, information related to a slice provided by the base station 100, and allocates radio resources to a slice. The communication control unit 153 has a function to perform communication with the terminal device 200 by using a slice. The processing unit 150 may additionally include another component other than these components. Thus, the processing unit 150 may also perform operation other than operation of these components.

<2.2. Configuration of terminal device>

The following describes an exemplary configuration of the terminal device 200 according to the present embodiment with reference to FIG. 10. FIG. 10 is a block diagram illustrating the exemplary configuration of the terminal device 200 according to the present embodiment. As illustrated in FIG. 10, the terminal device 200 includes an antenna unit 210, a radio communication unit 220, a storage unit 230, and a processing unit 240.

(1) Antenna unit 210

The antenna unit 210 radiates, as radio wave into space, a signal output by the radio communication unit 220. In addition, the antenna unit 210 converts radio wave in space into a signal and outputs the signal to the radio communication unit 220.

(2) Radio communication unit 220

The radio communication unit 220 transmits and receives signals. For example, the radio communication unit 220 receives a downlink signal from the base station and transmits an uplink signal to the base station.

(3) Storage unit 230

The storage unit 230 temporarily or permanently stores computer programs and various kinds of data for operation of the terminal device 200.

(4) Processing unit 240

The processing unit 240 provides various functions of the terminal device 200. The processing unit 240 includes a slice processing unit 241 and a communication control unit 243. The slice processing unit 241 has a function to perform various kinds of processing related to a slice provided by the base station 100. For example, the slice processing unit 241 reports information of the terminal device 200 related to a slice to the base station 100, requests the base station 100 for use permission for a new slice, and sets maximum transmission power to each slice. The communication control unit 243 has a function to perform communication with the base station 100 by using a slice. The processing unit 240 may additionally include another component other than these components. Thus, the processing unit 240 may also perform operation other than operation of these components.

<<3. Technical characteristics>>

<3.1. First technical characteristic>

The first technical characteristic relates to communication of information related to the isolation of a slice of the RAN.

<3.1.1. Technical problem>

The terminal device has been notified of no information of slice isolation in the RAN. Thus, the terminal device has had difficulties in selecting a slice having assured isolation as a connection destination and in selecting a slice not having assured isolation as a connection destination. To improve the degree of freedom of network resource provision, it is desirable that information related to slice isolation in the RAN is provided and a slice in accordance with selection by the terminal device is provided.

<3.1.2. Technical characteristic>

The base station 100 (for example, the slice processing unit 151) provides a plurality of slices. Then, the base station 100 transmits, to the terminal device 200, capability information related to provision of a slice having assured isolation. The capability information includes at least one of information indicating whether a slice having assured isolation can be provided and information indicating whether a slice not having assured isolation can be provided. The capability information may be transmitted by an optional method. For example, the base station 100 transmits the capability information to the terminal device 200 through system information or other higher-level layer signaling.

Accordingly, the terminal device 200 can know whether the base station 100 can provide a slice having assured isolation. Thus, the terminal device 200 can select, as a connection destination, the base station 100 that can provide a slice having assured isolation or a slice not having assured isolation.

The terminal device 200 (for example, the slice processing unit 241) may request the base station 100 that provides a plurality of slices to provide a slice having assured isolation. The terminal device 200 performs the request based on the capability information received from the base station 100. Accordingly, the terminal device 200 can be provided with a slice having assured isolation. The terminal device 200 may request the base station 100 that provides a plurality of slices to provide a slice not having assured isolation. Accordingly, the terminal device 200 can be provided with a slice not having assured isolation.

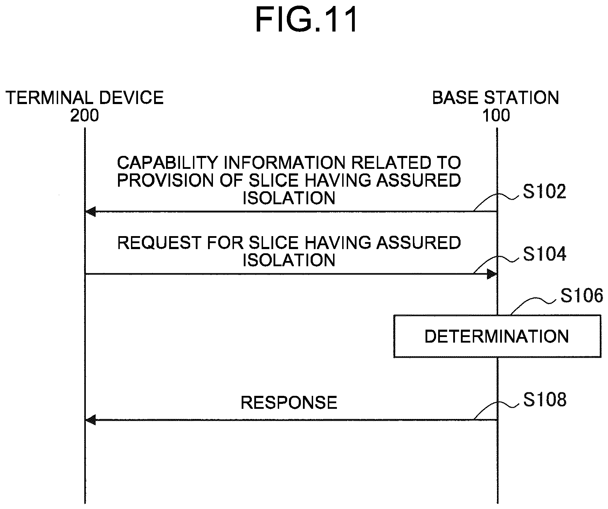

The following describes the process of processing related to the above-described information communication with reference to FIG. 11. FIG. 11 is a sequence diagram illustrating an exemplary procedure for slice provision executed in the system 1 according to the present embodiment. The present sequence involves the base station 100 and the terminal device 200.

As illustrated in FIG. 11, first, the base station 100 transmits, to the terminal device 200, the capability information related to provision of a slice having assured isolation (step S102). The capability information indicates that a slice having assured isolation can be provided. Then, the terminal device 200 transmits, to the base station 100, a request for a slice having assured isolation based on the received capability information (step S104). Then, the base station 100 determines whether to provide a slice having assured isolation based on the request from the terminal device 200 (step S106). Subsequently, the base station 100 transmits a response including information indicating a result of the determination to the terminal device 200 (step S108). In addition to the information indicating whether to provide a slice having assured isolation, the response may include identification information of the slice to be provided, and allocation schedule information (to be described later) related to the slice to be provided.

<3.2. Second technical characteristic>

The second technical characteristic relates to assurance of the isolation of a slice of the RAN when the slice of the RAN is time-multiplexed (in other words, provided with time division multiplexing (TDM)).

<3.2.1. Technical problem>

A plurality of slices are provided in an identical bandwidth part of an identical component carrier, in other words, in an identical frequency band in some cases. Thus, a plurality of slices are multiplexed by a TDM scheme in some cases. When a plurality of slices are multiplexed by the TDM and the sub carrier spacing is different for each slice, sub frames including OFDM symbols with sub carrier spacings different from each other are continuously disposed in the direction of time.

In this case it is desirable to assure isolation while reducing interference between slices. The isolation in this case includes two kinds of isolation, namely, resource isolation and interference isolation.

<3.2.2. Technical characteristic>

(1) Assurance of resource isolation

The base station 100 (for example, the slice processing unit 151) determines a schedule of radio resource allocation to each of a plurality of slices provided by the base station 100. The base station 100 determines an allocation schedule for allocating time resources different from each other to the plurality of respective slices (in other words, for multiplexing a plurality of slices by the TDM scheme). Then, the base station 100 allocates, in accordance with the allocation schedule, radio resources to each of a plurality of slices provided by the base station 100. The allocation schedule is quasi-statically determined. Thus, the base station 100 quasi-statically performs the radio resource allocation to each slice. "Quasi-statically" means that no variation occurs with a dynamic event such as traffic increase and decrease, and variation along with a quasi-static change such as increase and decrease of the number of slices is allowed. The radio resources allocated to each slice do not vary with a dynamic event such as traffic increase and decrease, which assures slice isolation. The base station 100 allocates different radio resources for each slice. The number of slices provided by the base station 100 may differ for each frequency band (identical component carrier or identical bandwidth part).

The base station 100 (for example, the slice processing unit 151) transmits, to the terminal device 200, information indicating the schedule of radio resource allocation to slices provided by the base station 100. The information indicating the schedule of radio resource allocation to slices and provided to the terminal device 200 is also referred to as allocation schedule information below. The terminal device 200 (for example, the slice processing unit 241) can know which radio resource is to be allocated to which slice by referring to the received information indicating the allocation schedule. Accordingly, the terminal device 200 can perform communication using slices with the base station 100. The allocation schedule information may be transmitting by an optional method. For example, the base station 100 transmits the allocation schedule information to the terminal device 200 through system information or other higher-level layer signaling. Alternatively, the allocation schedule information may be transmitted to the terminal device 200 through dedicated signaling.

A slice is desirably provided in a cell-specific manner. This is because a radio resource that is one frequency band is allocated to a plurality of slices in a divided manner and then provided to a plurality of terminal devices 200. One slice is shared by a plurality of terminal devices 200. However, use permission of a slice provided by the base station 100 is set for each terminal device 200, and only a permitted terminal device 200 can use the slice.

The sub carrier spacing is same or different between slices, depending on a case. The number of slots included in one sub frame may differ in accordance with the sub carrier spacing. However, the sub frame is fixed to 1 ms. Thus, the minimum unit of radio resources allocated to a slice in the direction of time is desirably the sub frame. This is because, when a plurality of slices are multiplexed by the TDM, the timing at which slices are switched is uniformed to the unit of 1 ms. In 5G, the link direction can be specified for each OFDM symbol. Thus, when radio resources are allocated to a slice for each sub frame, UL/DL switching can be flexibly performed in the sub frame, in other words, in the slice.

(2) Variations of allocation schedule

Various methods of allocating radio resources to a slice and various kinds of allocation schedule information are possible. Their examples are described below.

• First example

- Basic principle

In a first example, radio resource allocation is scheduled for each slice. The first example is different from a second example to be described later in that the amount (in other words, pipe thickness) of radio resources allocated to each slice can be flexibly set.

The schedule of radio resource allocation for each slice includes specification of a radio frame scheduled to be allocated and specification of a sub frame scheduled to be allocated in the radio frame scheduled to be allocated.

The allocation schedule information includes information indicating the schedule of allocation of a set of radio frames for each slice. For example, it is assumed that, for each set of $SFN_{MAX}$ (in the LTE, 1024) radio frames, system frame numbers (SFNs) 0 to $SFN_{MAX}$-1 are set to the radio frames. In this case, the allocation schedule information includes information with which a radio frame to be allocated to each slice is specified by a SFN. At allocation execution, the radio frames determined by the SFN specified in the allocation schedule information is allocated to the slice. The allocation of a set of radio frames may be periodically performed, and the allocation schedule information may be information indicating the period of allocation of a set of radio frames.

In addition, the allocation schedule information includes information indicating the schedule of allocation of a set of sub frames in a radio frame scheduled to be allocated for each slice. Such information is achieved by, for example, a lookup table. The lookup table is a table listing the position of a sub frame to be allocated to a slice among 10 sub frames included in a radio frame. At allocation execution, among the sub frames included in a radio frame scheduled to be allocated, a sub frame at a position specified by the lookup table included in the allocation schedule information is allocated to a slice.

- Resolution of radio resource duplication (collision) between slices

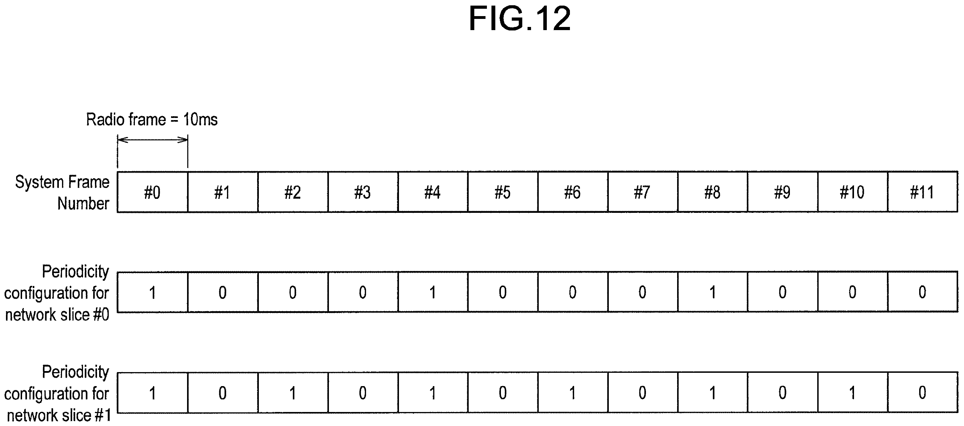

A radio frame scheduled to be allocated may be duplicated among a plurality of slices. This point will be described below with reference to FIG. 12.

FIG. 12 is a diagram for description of a first example of radio resource allocation to slices according to the present embodiment. FIG. 12 illustrates an exemplary schedule of allocation (period) to two slices (#0 and #1) among 12 radio frames (#0 to #11). In the allocation schedule, a radio frame denoted by "1" is scheduled to be allocated to a slice, and a radio frame denoted by "0" is scheduled not to be allocated to a slice. As illustrated in FIG. 12, radio frames are scheduled to be allocated to Slice #0 in the period of four radio frames (radio frames #0, #4, and #8). In addition, radio frames are scheduled to be allocated to Slice #1 in the period of two radio frames (radio frames #0, #2, #4, #6, and #8). Thus, radio frames #0, #4, and #8 are scheduled to be allocated to Slices #0 and #1 in duplicate.

When a radio frame scheduled to be allocated is duplicated, it is desirable that each sub frame scheduled to be allocated is not duplicated. This is because, when duplication occurs to sub frames scheduled to be allocated, a plurality of slices exist in mixture in an identical radio resource, and it is difficult to assure slice isolation.

Thus, the base station 100 (for example, the slice processing unit 151) may exclusively set a lookup table to a plurality of slices. The exclusive setting of a lookup table means that the position of each sub frame scheduled to be allocated is set differently among a plurality of slices. When a lookup table is exclusively set, each sub frame scheduled to be allocated is not duplicated even when a radio frame scheduled to be allocated is duplicated among a plurality of slices. Thus, slice isolation is assured.

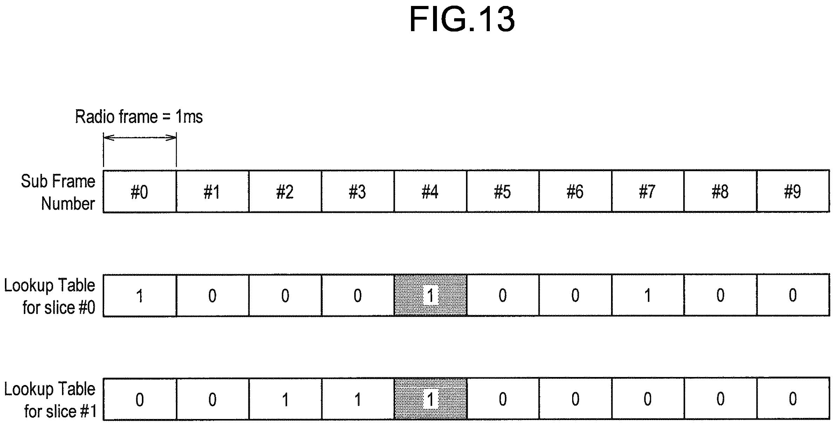

The base station 100 (for example, the slice processing unit 151) may non-exclusively set a lookup table to a plurality of slices. The non-exclusive setting of a lookup table means that the positions of at least some of sub frames scheduled to be allocated are set while duplication among a plurality of slices is allowed. When a lookup table is non-exclusively set, the number of sub frames allocable to one slice in a radio frame increases. Thus, radio resources can be flexibly allocated to a slice unless a radio frame scheduled to be allocated is duplicated. However, when a radio frame scheduled to be allocated is duplicated among a plurality of slices, the position of a sub frame scheduled to be allocated may be duplicated. This point will be described below with reference to FIG. 13.

FIG. 13 is a diagram for description of the first example of radio resource allocation to slices according to the present embodiment. FIG. 13 illustrates 10 sub frames (#0 to #9) included in radio frame #0, #4, or #8 illustrated in FIG. 12 and lookup tables set to two slices (#0 and #1). In the lookup tables, a sub frame denoted by "1" is scheduled to be allocated to a slice, and a sub frame denoted by "0" is scheduled not to be allocated to a slice. As illustrated in FIG. 13, according to the lookup table for Slice #0, Sub Frames #0, #4, and #7 are scheduled to be allocated to Slice #0. According to the lookup table for Slice #1, Sub Frames #2, #3, and #4 are scheduled to be allocated to Slice #1. Thus, Slice #4 is scheduled to be allocated to Slices #0 and #1 in duplicate. Such duplication of a sub frame scheduled to be allocated among a plurality of slices is desirably resolved to assure slice isolation.

Thus, the base station 100 (for example, the communication control unit 153) sets, in advance, an adjustment rule when a sub frame scheduled to be allocated is duplicated between different slices, and allocates the sub frame to the slices based on the adjustment rule. More specifically, when a sub frame scheduled to be allocated is duplicated among a plurality of slices, the base station 100 preferentially allocates the sub frame, the allocation schedule of which is duplicated to any one of the plurality of slices, and does not allocate the sub frame to the remaining slices. Accordingly, slice isolation can be assured when a lookup table is non-exclusively set. The allocation schedule information includes information indicating the adjustment rule. Accordingly, the terminal device 200 (for example, the slice processing unit 241) can appropriately recognize radio resources allocated to each slice even when a lookup table is non-exclusively set.

The adjustment rule may be a rule based on the length of the period of a radio frame allocated to a slice. For example, the adjustment rule may be set such that a slice for which the period of allocation of a set of radio frames is long is prioritized over a slice for which the period is short. With the setting, since the period of allocation of a set of radio frames is longer for Slice #0 in the example illustrated in FIGS. 12 and 13, Sub Frame #4 is allocated to Slice #0. The adjustment rule may be set such that a slice for which the period of allocation of a set of radio frames is short is prioritized over a slice for which the period is long. With the setting, since the period of allocation of a set of radio frames is shorter for Slice #1 in the example illustrated in FIGS. 12 and 13, Sub Frame #4 is allocated to Slice #1.

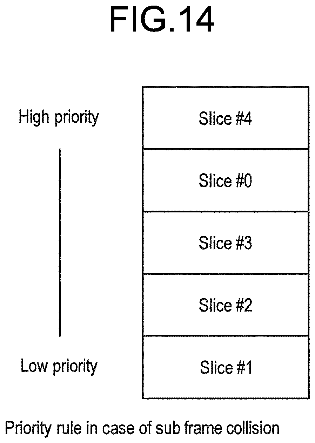

The adjustment rule may be a rule based on priorities set to slices in advance. For example, the adjustment rule is set such that a slice having a high priority is prioritized. With the setting, when a sub frame scheduled to be allocated is duplicated, the sub frame, for which the allocation schedule is duplicated, is allocated to a slice having a high priority but not allocated to other slices. This point will be described below with reference to FIG. 14. FIG. 14 is a diagram for description of an exemplary adjustment rule when a sub frame scheduled to be allocated is duplicated. As illustrated in FIG. 14, the base station 100 can provide five slices (#0 to #4), higher priorities are set in advance in the order of Slices #4, #0, #3, #2, and #1. For example, when a sub frame scheduled to be allocated is duplicated between Slices #4 and #0, a sub frame for which the allocation schedule is duplicated is allocated to Slice #4 having a higher priority.

The resolution of duplication of radio resources among slices is described above.

The allocation schedule information transmitted from the base station 100 to the terminal device 200 includes, for each slice, information indicating the schedule of allocation of a set of radio frames, information indicating the schedule of allocation of each sub frame in a radio frame scheduled to be allocated, and information indicating the adjustment rule. However, the terminal device 200 may not be notified of the information indicating the adjustment rule as the allocation schedule information. In this case, the adjustment rule is implemented as a circuit or software of the terminal device 200.

It would be potentially thought that slice isolation cannot be assured by non-exclusively setting a lookup table and using the adjustment rule to resolve duplication of a sub frame scheduled to be allocated. However, duplication of a sub frame scheduled to be allocated is not caused by a dynamic event but is caused by a lookup table quasi-statically set. Then, the duplication is resolved based on the adjustment rule that is quasi-statically set as well. Thus, it can be said that slice isolation is assured when a lookup table is non-exclusively set and the adjustment rule is used to resolve duplication of a sub frame scheduled to be allocated.

• Second example

In the second example, allocation of radio resources to a plurality of slices is collectively scheduled. According to the second example, it is possible to avoid allocation schedule duplication among slices in the description of the first example.

The allocation schedule information includes information indicating the position of a sub frame scheduled to be allocated to each of a plurality of slices, and information indicating a duration in which the information indicating the position of a sub frame scheduled to be allocated is valid. The former information is achieved by a lookup table. The lookup table is a table indicating which of a plurality of sub frames is allocated to which of a plurality of slices. The number of elements included in the lookup table may be equal to or different from the number (which is 10) of sub frames included in a radio frame. The latter information may be set as the number of times that the lookup table is repeatedly applied.

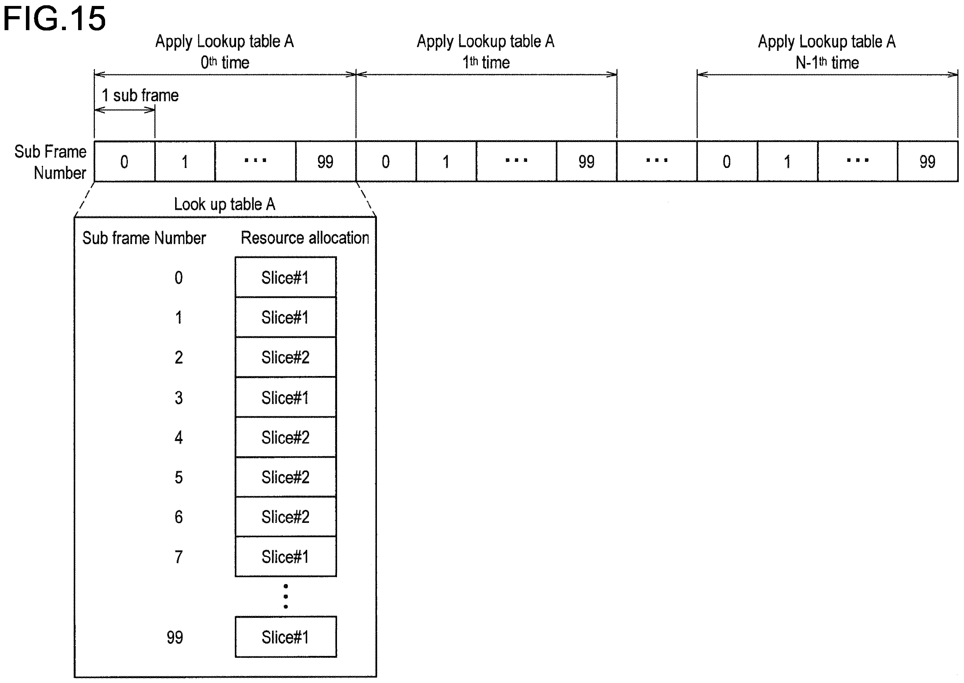

The base station 100 (for example, the slice processing unit 151) generates, for a plurality of slices provided by the base station 100, a lookup table so that a sub frame scheduled to be allocated is not duplicated among the slices. Accordingly, allocation schedule duplication among slices in the description of the first example does not occur. Then, the base station 100 allocates each sub frame to a slice in accordance with the lookup table. In addition, the base station 100 repeatedly applies the lookup table a predetermined number of times. Such allocation according to the second example will be described below with reference to FIG. 15.

FIG. 15 is a diagram for description of a second example of radio resource allocation to slices according to the present embodiment. In the example illustrated in FIG. 15, Lookup table A is repeatedly applied N times (0 to N-1). The allocation schedule information transmitted to the terminal device 200 includes information indicating Lookup table A, and information indicating the number N of times of the repetition. In Lookup table A, a slice (#1 or #2), allocation to which is scheduled is defined for each sub frame number. For example, the base station 100 allocates sub frames having Sub Frame Numbers 0 and 1 to Slice #1, and allocates a sub frame having Sub Frame Number 2 to Slice #2. The number of elements of Lookup table A is 100 (with sub frame numbers 0 to 99), which corresponds to the number of sub frames included in 10 radio frames. Thus, the base station 100 performs allocation by repeatedly applying Lookup table A for each set of 10 radio frames.

(3) Allocation schedule switching

The base station 100 (for example, the slice processing unit 151) may quasi-statically change the schedule of radio resource allocation to slices. Thus, a validity period may be set to the allocation schedule information. The validity period may be set by using, for example, the SFN of a radio frame.

A radio frame is specified by the SFN. The radio frame is counted from 0 to $SFN_{MAX}-1$, and counted from 0 again when the SFN reaches $SFN_{MAX}-1$. In the LTE, $SFN_{MAX}$ is 1024. For example, the validity period of slice allocation schedule is set as "until the SFN reaches $SFN_{MAX}-1$ from 0". In other words, the allocation schedule is switched at the timing when the SFN becomes zero. The amount of radio resources allocated to a slice is not to be frequently switched, and thus the switching at the timing when the SFN becomes zero is sufficient. $SFN_{MAX}$ indicating the validity period of a slice may be 1024 as that in the LTE or may be a value, such as 512 or 2048, different from that in the LTE. $SFN_{MAX}$ indicating the validity period of a slice may be set to the terminal device 200 in advance or may be included in the allocation schedule information and given as notification.

The validity period of the allocation schedule information may be set by absolute time. However, no unit for providing absolute time is defined in the NR as a RAT. Thus, such a unit for providing absolute time is required to be newly defined as a basis for setting the validity period of the allocation schedule information by absolute time, which complicates an interface and thus is not preferable.

Before switching the schedule of radio resource allocation to slices, the base station 100 (for example, the slice processing unit 151) transmits information indicating the allocation schedule after the switching to the terminal device 200. Accordingly, the terminal device 200 (for example, the slice processing unit 241) can know in advance the schedule of radio resource allocation to slices in the future. Thus, right after the switching, the terminal device 200 can appropriately recognize radio resources allocated to each slice.

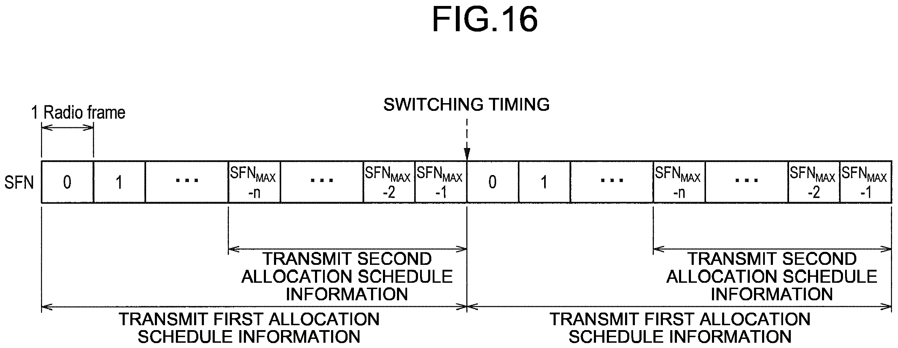

For example, the base station 100 transmits, to the terminal device 200, the allocation schedule information that is currently valid (hereinafter also referred to as first allocation schedule information) and the allocation schedule information after switching (hereinafter also referred to as second allocation schedule information). For example, the base station 100 transmits the first allocation schedule information to the terminal device 200 in the validity period (until the SFN reaches $SFN_{MAX}-1$ from 0) of the first allocation schedule information. In addition, the base station 100 starts transmitting the second allocation schedule information to the terminal device 200 a predetermined time before the start timing of the validity period of the second allocation schedule information, in other words, the timing of allocation schedule switching. This point will be described below with reference to FIG. 16.

FIG. 16 is a diagram for description of exemplary switching of the schedule of radio resource allocation to slices according to the present embodiment. FIG. 16 illustrates radio frames until the SFN is counted from 0 to $SFN_{MAX}-1$ and counted again from 0 to $SFN_{MAX}-1$. The switching timing of the schedule of radio resource allocation to slices is the timing when the SFN returns to zero. As illustrated in FIG. 16, the base station 100 transmits the first allocation schedule information to the terminal device 200 in the validity period (until the SFN reaches $SFN_{MAX}-1$ from 0) of the first allocation schedule information. In addition, the base station 100 starts transmitting the second allocation schedule information to the terminal device 200 in a radio frame n radio frames before the timing of allocation schedule switching.

In FIG. 16, it is assumed that notification of the first allocation schedule information and the second allocation schedule information is performed by using system information. Alternatively, the first allocation schedule information and the second allocation schedule information may be individually transmitted to the terminal device 200 by using dedicated signaling. In this case, the first allocation schedule information and the second allocation schedule information are distinguished in the dedicated signaling.

(4) Processing process

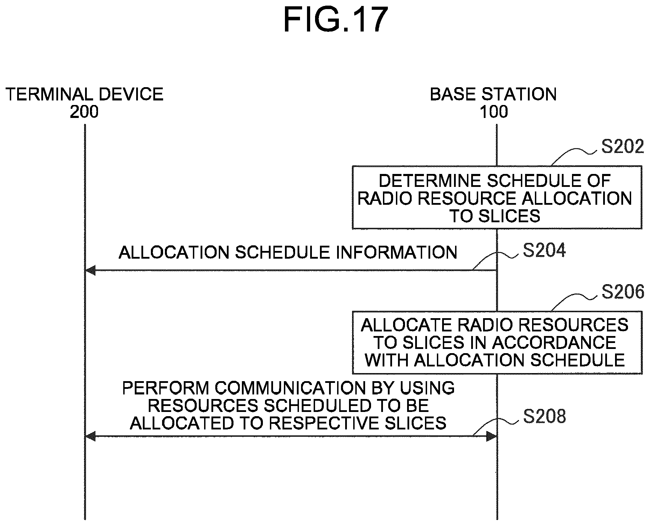

The following describes the process of processing related to the second technical characteristic with reference to FIG. 17. FIG. 17 is a sequence diagram illustrating an exemplary procedure for slice provision executed in the system 1 according to the present embodiment. The present sequence involves the base station 100 and the terminal device 200.

As illustrated in FIG. 17, first, the base station 100 determines the schedule of radio resource allocation to slices (step S202). Then, the base station 100 transmits the allocation schedule information to the terminal device 200 (step S204). Subsequently, the base station 100 allocates radio resources to slices in accordance with the allocation schedule (step S206). Then, the base station 100 and the terminal device 200 perform communication by using resources scheduled to be allocated to the respective slices (step S208).

<3.3. Third technical characteristic>

The third technical characteristic relates to assurance of the isolation of a slice of the RAN when the slice of the RAN is frequency-multiplexed (in other words, provided with frequency division multiplexing (FDM)).

<3.3.1. Technical problem>

When different frequency bands are allocated to a plurality of respective slices, a plurality of slices are simultaneously provided in some cases. In other words, the plurality of slices are multiplexed by an FDM scheme in some cases.

Slice isolation is seemingly assured when a plurality of slices are multiplexed by the FDM scheme. However, in terms of transmission power used for uplink transmission by the terminal device 200, slice isolation is not assured in some cases. For example, when the terminal device 200 uses a plurality of slices and performs uplink transmission by using a large amount of transmission power through some slices, electrical power for uplink transmission through any other slice may run short. In this case, communication using a slice is affected by a dynamic event in another slice, and thus slice isolation is not assured.

Thus, slice isolation in the region of electrical power is desirably assured when a plurality of slices are multiplexed by the FDM scheme.

<3.3.2. Technical characteristic>

(1) Setting of maximum transmission power for each slice

The base station 100 (for example, the slice processing unit 151) allocates different frequency bands to a plurality of respective slices provided by the base station 100 (in other words, the plurality of slices are multiplexed by the FDM scheme). The terminal device 200 (for example, the slice processing unit 241) sets maximum transmission power for each of a plurality of slices used by the terminal device 200. The setting of the maximum transmission power for each slice is performed, for example, at the timing when use of new slices is started. Then, the terminal device 200 (for example, the communication control unit 243) performs uplink transmission in each slice while the maximum transmission power for the slice is not exceeded.

The terminal device 200 (for example, the slice processing unit 241) sets the maximum transmission power for each slice so that the sum of the maximum transmission power for each slice over one or more slices used by the terminal device 200 does not exceed the maximum transmission power for the terminal device 200. In other words, the terminal device 200 sets the maximum transmission power for each slice so that the sum of the maximum transmission power for each slice over one or more slices used by the terminal device 200 is equal to or smaller than the maximum transmission power for the terminal device 200. The maximum transmission power for the terminal device 200 is the maximum value of electrical power that can be used for uplink transmission by the terminal device 200. Thus, even when the terminal device 200 performs uplink transmission with maximum transmission power set for a slice, electrical power for uplink transmission through another slice does not run short. In this manner, slice isolation in the region of electrical power is assured. The terminal device 200 may report the maximum transmission power for each slice to the base station 100.

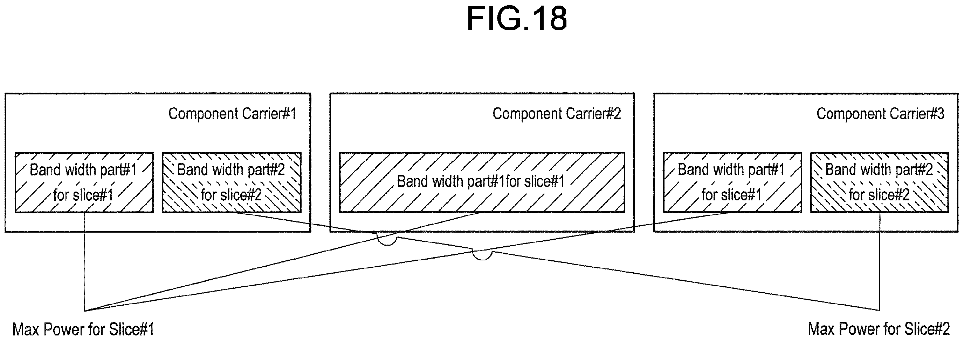

The frequency band allocated to a slice extends across a plurality of component carriers and/or a plurality of bandwidth parts in some cases, and in such a case, the sum of transmission power usable in the plurality of component carriers and/or the plurality of bandwidth parts is set as the maximum transmission power for each slice. This point will be described below with reference to FIG. 18.

FIG. 18 is a diagram for description of exemplary maximum transmission power set for each slice according to the present embodiment. FIG. 18 illustrates a plurality of slices (#1 and #2) allocated (in other words, usable) to a certain terminal device 200. As illustrated in FIG. 18, Bandwidth Part #1 of Component Carrier #1, Bandwidth Part #1 of Component Carrier #2, and Bandwidth Part #1 of Component Carrier #3 are allocated to Slice #1. Then, the maximum transmission power for each slice (Max Power for Slice #1) is set to Slice #1. Thus, the terminal device 200 controls transmission power so that the sum of transmission power over frequency bands included in Slice #1 does not exceed the set maximum transmission power. In addition, Bandwidth Part #2 of Component Carrier #1 and Bandwidth Part #2 of Component Carrier #3 are allocated to Slice #2. Then, the maximum transmission power for each slice (Max Power for Slice #2) is set to Slice #2. Thus, the terminal device 200 controls transmission power so that the sum of transmission power over frequency bands included in Slice #2 does not exceed the set maximum transmission power.

(2) Reporting of first residual transmission power and determination of new slice use permission

• Reporting of first residual transmission power

The terminal device 200 (for example, the slice processing unit 241) reports, to the base station 100, first residual transmission power obtained by subtracting the sum of the maximum transmission power set for each of one or more slices used by the terminal device 200 from the maximum transmission power for the terminal device 200. For example, when two slices are being used by the terminal device 200, a value obtained by subtracting the sum of the maximum transmission power set for each of the two slices from the maximum transmission power for the terminal device 200 is reported to the base station 100. The expression below is an expression definition of the first residual transmission power.

$$R_1 = MaxPower_{UE} - \sum_{i \in I} MaxPower_i \tag{1}$$

In the above expression, $R_1$ represents the first residual transmission power. $MaxPower_{UE}$ represents the maximum transmission power for the terminal device 200. $MaxPower_i$ represents the maximum transmission power set for a slice i. The letter i is the index of the slice. The letter I represents a set including one or more slices usable to the terminal device 200.

The terminal device 200 reports the first residual transmission power when requesting the base station 100 for use permission of a new slice.

• Use permission determination of new slice

The base station 100 (for example, the slice processing unit 151) determines whether to permit the terminal device 200 to use a new slice based on the first residual transmission power reported from the terminal device 200. For example, the base station 100 permits use of a new slice when the residual transmission power exceeds a predetermined threshold, or does not permit use of a new slice when the residual transmission power does not exceed. The predetermined threshold is, for example, a value equal to or larger than the maximum transmission power that can be set for a slice as a determination target. As a result, when use of a new slice is permitted, the terminal device 200 can set the maximum transmission power for the slice newly permitted for use so that the sum of the maximum transmission power for each slice does not exceed the maximum transmission power for the terminal device 200. Thus, the isolation of a plurality of slices used by the terminal device 200 and including the slice newly permitted for use can be assured in the region of electrical power.

• Processing process

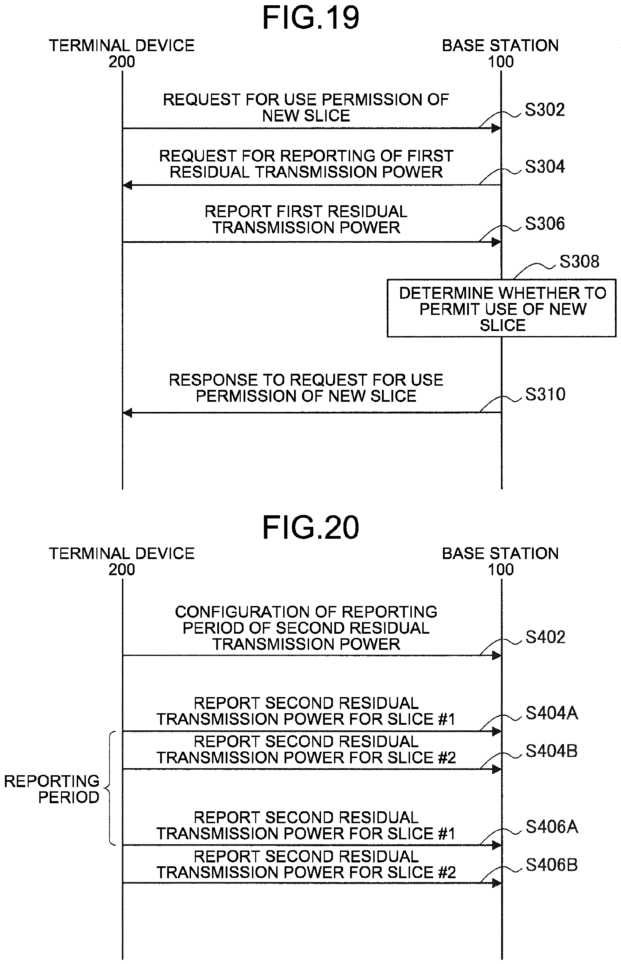

The following describes the process of processing related to the above-described point with reference to FIG. 19. FIG. 19 is a sequence diagram illustrating an exemplary procedure related to reporting of first residual transmission power and determination of new slice use permission and executed in the system 1 according to the present embodiment. The present sequence involves the base station 100 and the terminal device 200.

As illustrated in FIG. 19, first, the terminal device 200 transmits a request for use permission of a new slice to the base station 100 (step S302). Then, the base station 100 transmits a request for reporting of the first residual transmission power to the terminal device 200 (step S304). Subsequently, the terminal device 200 reports the first residual transmission power to the base station 100 based on the reporting request from the base station 100 (step S306). Then, the base station 100 determines whether to permit the terminal device 200 to use a new slice based on the first residual transmission power reported from the terminal device 200 (step S308). Subsequently, the base station 100 transmits, to the terminal device 200, a response to the request for use permission of a new slice (step S310). The response includes a result of the determination of whether to permit the terminal device 200 to use a new slice.

(3) Reporting of second residual transmission power and scheduling of uplink transmission

• Reporting of second residual transmission power

The terminal device 200 (for example, the slice processing unit 241) reports, to the base station 100, second residual transmission power obtained by subtracting transmission power being used from the maximum transmission power set for each of one or more slices used by the terminal device 200. For example, when two slices are being used, a value obtained by subtracting transmission power being used at each of the two slices from the maximum transmission power set for the slice is reported to the base station 100. The second residual transmission power can be regarded as the available capacity of transmission power for each slice. Thus, the second residual transmission power can be regarded as power headroom of each slice. The expression below is an expression definition of the second residual transmission power.

$$R_2(i) = MaxPower_i - CurrentPower_i \qquad (2)$$

In the above expression, $R_2(i)$ represents the second residual transmission power for slice i. The letter i represents the index of the slice. $MaxPower_i$ represents the maximum transmission power set for a slice i. $CurrentPower_i$ represents transmission power being used at the slice i.

The terminal device 200 may periodically report the second residual transmission power. The period of the reporting is set by the base station 100.

• Scheduling of uplink transmission

The base station 100 (for example, the communication control unit 153) schedules uplink transmission by the terminal device 200 based on the second residual transmission power reported from the terminal device 200. For example, the base station 100 increases and decreases the frequency of uplink transmission of each slice based on the second residual transmission power for the slice. Accordingly, the terminal device 200 can be caused to perform uplink transmission in each of a plurality of slices used by the terminal device 200 while the maximum transmission power set for the slice is not exceeded. Accordingly, the isolation of a plurality of slices used by the terminal device 200 can be assured in the region of electrical power.

• Processing process

The following describes the process of processing related to the above-described point with reference to FIG. 20. FIG. 20 is a sequence diagram illustrating an exemplary procedure related to reporting of the second residual transmission power and executed in the system 1 according to the present embodiment. The present sequence involves the base station 100 and the terminal device 200. The terminal device 200 use two slices (#1 and #2).

As illustrated in FIG. 20, first, the base station 100 transmits the configuration of the period of reporting of the second residual transmission power to the terminal device 200 (step S402). Then, the terminal device 200 reports the second residual transmission power for each of slices (#1 and #2) being used to the base station 100 (steps S404A and S404B). Subsequently, when the reporting period indicated by the received configuration is reached, the terminal device 200 reports the second residual transmission power for each of slices (#1 and #2) being used to the base station 100 again (steps S406A and S406B).

<3.4. Fourth technical characteristic>

The fourth technical characteristic relates to operators of slice operation.

<3.4.1. Technical problem>

A plurality of operators may share one frequency band. In addition, the plurality of operators may share one base station. In this case as well, slice isolation is desirably assured.

<3.4.2. Technical characteristic>

A plurality of slices provided by the base station 100 may be operated by different operators. Thus, one base station 100 may provide a plurality of slices operated by respective operators different. The base station 100 may multiplex the plurality of slices operated by the respective different operators by the TDM scheme related to the second technical characteristic described above or by the FDM scheme related to the third technical characteristic described above.
Accordingly, traffics of different operators are transmitted and received in different slices, which assures slice isolation.

<3.5. Fifth technical characteristic>

The fifth technical characteristic relates to coexistence of a slice having assured isolation in the region of electrical power and a slice not having assured isolation in the region of electrical power when the FDM is employed.

<3.5.1. Technical problem>

The above-described third technical characteristic is the technology of assuring slice isolation in the region of electrical power. However, a slice having assured isolation is preferably provided in some cases, but a slice not having assured isolation is preferably provided in other cases. Thus, it is desirable to provide a configuration that allows coexistence of a slice having assured isolation in the region of electrical power and a slice not having assured isolation in the region of electrical power.

<3.5.2. Technical characteristic>

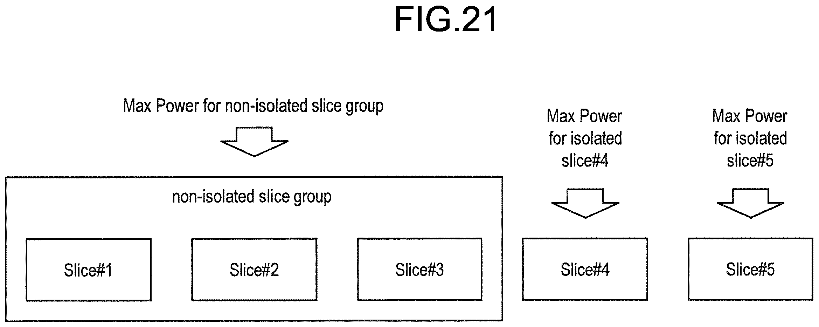

The following describes the fifth technical characteristic in detail with reference to FIG. 21.
FIG. 21 is a diagram for description of the configuration that allows coexistence of a slice having assured isolation in the region of electrical power and a slice not having assured isolation in the region of electrical power. FIG. 21 illustrates a plurality of slices (#1 to #5) used by the terminal device 200. Slices #4 and #5 are slices having assured isolation in the region of electrical power. Slices #1 to #3 are slices not having assured isolation in the region of electrical power.
The terminal device 200 (for example, the slice processing unit 241) sets the maximum transmission power to a group including a plurality of slices. The group includes a slice not having assured isolation. In the example illustrated in FIG. 21, the terminal device 200 sets the maximum transmission power to a group including Slices #1 to #3. The group is also referred to as a non-isolated slice group. The terminal device 200 performs uplink transmission in Slices #1 to #3 so that the sum of transmission power being used in Slices #1 to #3 does not exceed the maximum transmission power set for the non-isolated slice group. For example, when uplink transmission is performed in Slice #1 by using a large amount of transmission power, electrical power for uplink transmission in Slices #1 and #2 may run short. In this manner, the maximum transmission power can be set for each non-isolated slice group so that the isolation of slice included in the non-isolated slice group is not assured.
The terminal device 200 (for example, the slice processing unit 241) sets the maximum transmission power for each slice not belonging to the non-isolated slice group among the plurality of slices used by the terminal device 200 and the maximum transmission power for the non-isolated slice group so that the sum of the maximum transmission power for each slice not belonging to the non-isolated slice group and the maximum transmission power for the non-isolated slice group does not exceed the maximum transmission power for the terminal device 200. In other words, the terminal device 200 sets the maximum transmission power for each slice, isolation of which is to be assured and the maximum transmission power for the non-isolated slice group so that the sum of the maximum transmission power for each slice, isolation of which is to be assured and the maximum transmission power for the non-isolated slice group is equal to or smaller than the maximum transmission power for the terminal device 200. In the example illustrated in FIG. 21, the terminal device 200 sets the maximum transmission power for each of Slices #4 and #5 and the maximum transmission power for the non-isolated slice group so that the sum of the maximum transmission power for each of Slices #4 and #5 and the maximum transmission power for the non-isolated slice group including Slices #1 to #3 does not exceed the maximum transmission power for the terminal device 200. Accordingly, isolation of Slices #4 and #5 can be assured. In addition, isolation of each non-isolated slice group can be assured.

The second residual transmission power for the non-isolated slice group may be reported for each group. Specifically, the terminal device 200 reports, as the second residual transmission power to the base station 100, a value obtained by subtracting the sum of transmission power being used in a plurality of slices belonging to the non-isolated slice group from the maximum transmission power for the non-isolated slice group. Accordingly, the terminal device 200 can receive scheduling of uplink transmission for each non-isolated slice group.

<<4. Exemplary applications>>

The technology according to the present disclosure is applicable to various products.

For example, the base station 100 may be achieved as an eNB (evolved NodeB) of any kind, such as a macro eNB or a small eNB. The small eNB may be an eNB, such as a pico eNB, a micro eNB, or a home (femto) eNB, configured to cover a cell smaller than a macro cell. Instead, the base station 100 may be achieved as a base station of another kind, such as a NodeB or a base transceiver station (BTS). The base station 100 may include a main body (also referred to as a base station device) configured to control radio communication, and one or more remote radio heads (RRHs) disposed at a place different from that of the main body. Alternatively, various kinds of terminals to be described later may temporarily or semi-permanently execute a base station function to operate as the base station 100.

For example, the terminal device 200 may be achieved as a mobile terminal such as a smartphone, a tablet personal computer (PC), a notebook PC, a portable game terminal, a portable/dongle mobile router, or a digital camera, or an on-board terminal such as a car navigation device. Alternatively, the terminal device 200 may be achieved as a terminal (also referred to as a machine-type-communication (MTC) terminal) configured to perform machine-to-machine (M2M) communication. Alternatively, the terminal device 200 may be a radio communication module (for example, an integrated circuit module formed of one die) mounted on the terminal.

<4.1. Exemplary applications related to base station>

(First exemplary application)

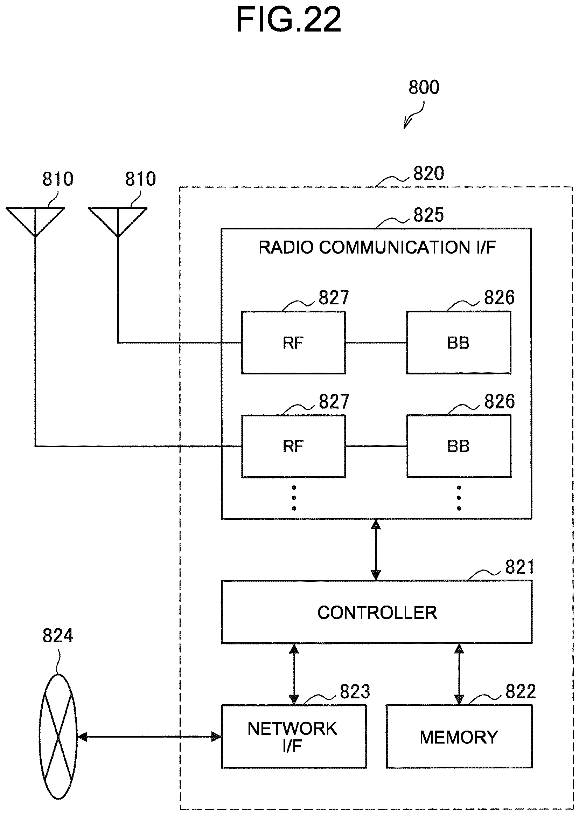

FIG. 22 is a block diagram illustrating a first exemplary schematic configuration of an eNB to which the technology according to the present disclosure is applicable. An eNB 800 includes one or more antennas 810 and a base station device 820. Each antenna 810 and the base station device 820 may be connected with each other through an RF cable.

Each antenna 810 includes one or a plurality of antenna elements (for example, a plurality of antenna elements forming a MIMO antenna) and is used to transmit and receive radio signals by the base station device 820. The eNB 800 may include a plurality of the antennas 810 as illustrated in FIG. 22, and for example, the plurality of antennas 810 may correspond to a plurality of respective frequency bands used by the eNB 800. FIG. 22 illustrates the example in which the eNB 800 includes the plurality of antennas 810, but the eNB 800 may include one antenna 810.

The base station device 820 includes a controller 821, a memory 822, a network interface 823, and a radio communication interface 825.

The controller 821 may be, for example, a CPU or a DSP and operates various higher-level-layer functions of the base station device 820. For example, the controller 821 generates a data packet from data in a signal processed by the radio communication interface 825 and forwards the generated packet through the network interface 823. The controller 821 may generate a bundled packet by bundling data from a plurality of baseband processors and forward the generated bundled packet. The controller 821 may have a logical function to execute control such as radio resource control, radio bearer control, mobility management, admission control, or scheduling. The control may be executed in cooperation with a nearby eNB or a core network node. The memory 822 includes a RAM and a ROM and stores computer programs executed by the controller 821 and various kinds of control data (for example, a terminal list, transmission power data, and scheduling data).

The network interface 823 is a communication interface for connecting the base station device 820 to a core network 824. The controller 821 may perform communication with the core network node or another eNB through the network interface 823. In this case, the eNB 800 and the core network node or the other eNB may be connected with each other through a logical interface (for example, an S1 interface or an X2 interface). The network interface 823 may be a wired communication interface or may be a radio communication interface for wireless backhaul. When the network interface 823 is a radio communication interface, the network interface 823 may use, for radio communication, a frequency band higher than a frequency band used by the radio communication interface 825.

The radio communication interface 825 supports a cellular communication scheme such as Long Term Evolution (LTE) or LTE-Advanced and provides wireless connection to a terminal positioned in the cell of the eNB 800 through each antenna 810. The radio communication interface 825 may typically include a baseband (BB) processor 826 and an RF circuit 827. The BB processor 826 may perform, for example, encoding/decoding, modulation/demodulation, and multiplexing/demultiplexing and executes various kinds of signal processing of each layer (for example, L1, medium access control (MAC), radio link control (RLC), or packet data convergence protocol (PDCP)). The BB processor 826 may include part or all of the above-described logical function in place of the controller 821. The BB processor 826 may be a module including a memory storing a communication control program, a processor configured to execute the computer program, and a related circuit, and the function of the BB processor 826 may be changeable through update of the above-described computer program.

The above-described module may be a card or blade inserted into a slot of the base station device 820 or may be a chip mounted on the above-described card or the above-described blade. The RF circuit 827 may include a mixer, a filter, an amplifier, or the like and transmits and receives radio signals through each antenna 810.

The radio communication interface 825 may include a plurality of the BB processors 826 as illustrated in FIG. 22, and for example, the plurality of BB processors 826 may correspond to a plurality of respective frequency bands used by the eNB 800. In addition, the radio communication interface 825 may include a plurality of the RF circuits 827 as illustrated in FIG. 22, and for example, the plurality of RF circuits 827 may correspond to a plurality of respective antenna elements. FIG. 22 illustrates the example in which the radio communication interface 825 includes the plurality of BB processors 826 and the plurality of RF circuits 827, but the radio communication interface 825 may include one BB processor 826 or one RF circuit 827.

In the eNB 800 illustrated in FIG. 22, one or more components (the slice processing unit 151 and/or the communication control unit 153) included in the processing unit 150 described with reference to FIG. 9 may be implemented on the radio communication interface 825. Alternatively, at least part of the components may be implemented on the controller 821. As an example, a module including part (for example, the BB processor 826) or all of the radio communication interface 825 and/or the controller 821 may be mounted on the eNB 800, and the above-described one or more components may be implemented on the module. In this case, the above-described module may store a computer program for causing the processor to function as the above-described one or more components (in other words, a computer program for causing the processor to execute operation of the above-described one or more components) and may execute the computer program. As another example, the computer program for causing the processor to function as the above-described one or more components may be installed on the eNB 800 and executed by the radio communication interface 825 (for example, the BB processor 826) and/or the controller 821. As described above, the eNB 800, the base station device 820, or the above-described module may be provided as a device including the above-described one or more components, or the computer program for causing the processor to function as the above-described one or more components may be provided. Alternatively, a readable recording medium in which the above-described computer program is recorded may be provided.

In the eNB 800 illustrated in FIG. 22, the radio communication unit 120 described with reference to FIG. 9 may be implemented on the radio communication interface 825 (for example, the RF circuit 827). The antenna unit 110 may be implemented on each antenna 810. The network communication unit 130 may be implemented on the controller 821 and/or the network interface 823. The storage unit 140 may be implemented on the memory 822.

(Second exemplary application)

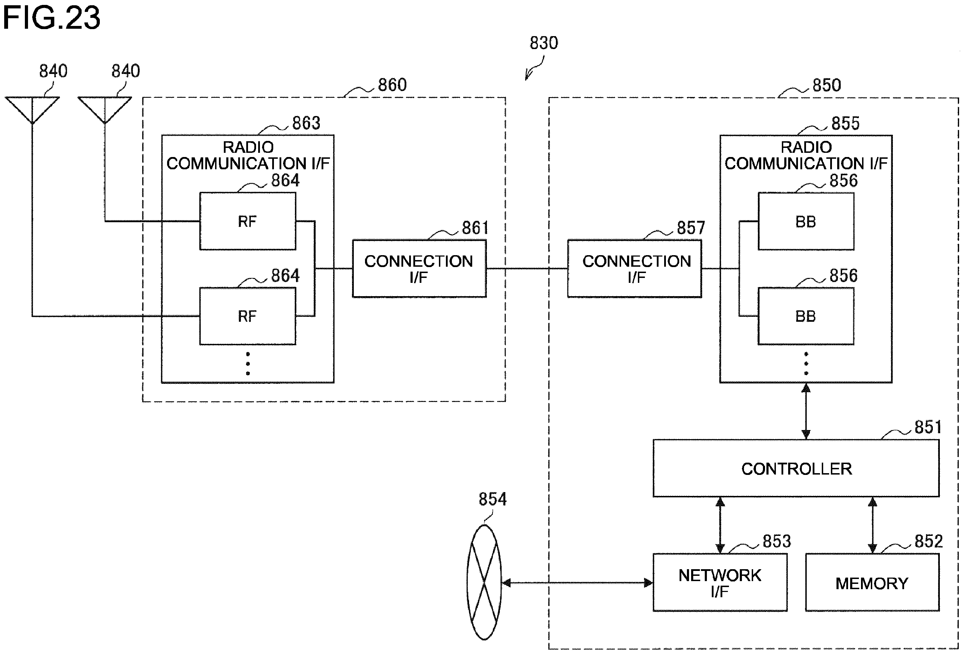

FIG. 23 is a block diagram illustrating a second exemplary schematic configuration of an eNB to which the technology according to the present disclosure is applicable. An eNB 830 includes one or more antennas 840, a base station device 850, and an RRH 860. Each antenna 840 and the RRH 860 may be connected with each other through an RF cable. The base station device 850 and the RRH 860 may be connected with each other through a high-speed line such as an optical fiber cable.

Each antenna 840 includes one or a plurality of antenna elements (for example, a plurality of antenna elements forming a MIMO antenna) and is used to transmit and receive radio signals by the RRH 860. The eNB 830 may include a plurality of the antennas 840 as illustrated in FIG. 23, and for example, the plurality of antennas 840 and may correspond to a plurality of respective frequency bands used by the eNB 830. FIG. 23 illustrates the example in which the eNB 830 includes the plurality of antennas 840, but the eNB 830 may include one antenna 840.

The base station device 850 includes a controller 851, a memory 852, a network interface 853, a radio communication interface 855, and a connection interface 857. The controller 851, the memory 852, and the network interface 853 are same as the controller 821, the memory 822, and the network interface 823, respectively, described with reference to FIG. 22.

The radio communication interface 855 supports a cellular communication scheme such as LTE or LTE-Advanced and provides wireless connection to a terminal positioned in a sector corresponding to the RRH 860 through the RRH 860 and each antenna 840. The radio communication interface 855 may typically include a BB processor 856. The BB processor 856 is same as the BB processor 826 described with reference to FIG. 22 except that the BB processor 856 is connected with an RF circuit 864 of the RRH 860 through the connection interface 857. The radio communication interface 855 may include a plurality of the BB processors 856 as illustrated in FIG. 23, and for example, the plurality of BB processors 856 may correspond to a plurality of respective frequency bands used by the eNB 830. FIG. 23 illustrates the example in which the radio communication interface 855 includes the plurality of BB processors 856, but the radio communication interface 855 may include one BB processor 856.

The connection interface 857 is an interface for connecting the base station device 850 (radio communication interface 855) with the RRH 860. The connection interface 857 may be a communication module for communication through the above-described high-speed line connecting the base station device 850 (radio communication interface 855) and the RRH 860.

The RRH 860 includes a connection interface 861 and a radio communication interface 863.

The connection interface 861 is an interface for connecting the RRH 860 (radio communication interface 863) with the base station device 850. The connection interface 861 may be a communication module for communication through the above-described high-speed line.

The radio communication interface 863 transmits and receives radio signals through each antenna 840. The radio communication interface 863 may typically include the RF circuit 864. The RF circuit 864 may include a mixer, a filter, an amplifier, or the like and transmits and receives radio signals through each antenna 840. The radio communication interface 863 may include a plurality of the RF circuits 864 as illustrated in FIG. 23, and for example, the plurality of RF circuits 864 may correspond to a plurality of respective antenna elements. FIG. 23 illustrates the example in which the radio communication interface 863 includes the plurality of RF circuits 864, but the radio communication interface 863 may include one RF circuit 864.

In the eNB 830 illustrated in FIG. 23, one or more components (the slice processing unit 151 and/or the communication control unit 153) included in the processing unit 150 described with reference to FIG. 9 may be implemented on the radio communication interface 855 and/or the radio communication interface 863. Alternatively, at least part of the components may be implemented on the controller 851. As an example, a module including part (for example, the BB processor 856) or all of the radio communication interface 855 and/or the controller 851 may be mounted on the eNB 830, and the above-described one or more components may be implemented on the module. In this case, the above-described module may store a computer program for causing the processor to function as the above-described one or more components (in other words, a computer program for causing the processor to execute operation of the above-described one or more components) and may execute the computer program. As another example, the computer program for causing the processor to function as the above-described one or more components may be installed on the eNB 830 and executed by the radio communication interface 855 (for example, the BB processor 856) and/or the controller 851. As described above, the eNB 830, the base station device 850 or the above-described module may be provided as a device including the above-described one or more components, or the computer program for causing the processor to function as the above-described one or more components may be provided. Alternatively, a readable recording medium in which the above-described computer program is recorded may be provided.

In the eNB 830 illustrated in FIG. 23, for example, the radio communication unit 120 described with reference to FIG. 9 may be implemented on the radio communication interface 863 (for example, the RF circuit 864). The antenna unit 110 may be implemented on each antenna 840. The network communication unit 130 may be implemented on the controller 851 and/or the network interface 853. The storage unit 140 may be implemented on the memory 852.

<4.2. Exemplary applications related to terminal device>

(First exemplary application)

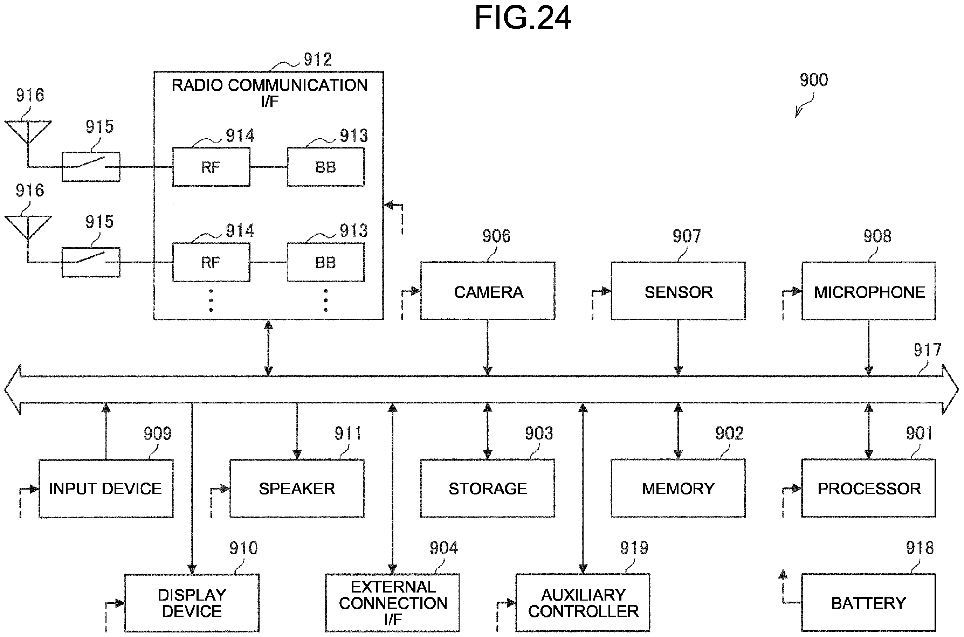

FIG. 24 is a block diagram illustrating an exemplary schematic configuration of a smartphone 900 to which the technology according to the present disclosure is applicable. The smartphone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on chip (SoC) and controls application-layer functions and other-layer functions of the smartphone 900. The memory 902 includes a RAM and a ROM and stores computer programs executed by the processor 901 and data. The storage 903 may include a storage medium such as a semiconductor memory or a hard disk. The external connection interface 904 is an interface for connecting an external device such as a memory card or a universal serial bus (USB) device to the smartphone 900.

The camera 906 includes an image sensor such as a charge coupled device (CCD) or a complementary metal oxide semiconductor (CMOS) and generates captured images. The sensor 907 may include sensors such as a positioning sensor, a gyro sensor, a geomagnetic sensor, and an acceleration sensor. The microphone 908 converts sound input to the smartphone 900 into a sound signal. The input device 909 includes, for example, a touch sensor configured to detect a touch on a screen of the display device 910, a keypad, a keyboard, a button, or a switch and receives an operation or information input from a user. The display device 910 includes a screen such as a liquid crystal display (LCD) or an organic light-emitting diode (OLED) display and displays an output image from the smartphone 900. The speaker 911 converts a sound signal output from the smartphone 900 into sound.

The radio communication interface 912 supports a cellular communication scheme such as LTE or LTE-Advanced and executes radio communication. The radio communication interface 912 may typically include a BB processor 913 and an RF circuit 914. The BB processor 913 may perform, for example, encoding/decoding, modulation/demodulation, and multiplexing/demultiplexing and executes various kinds of signal processing for radio communication. The RF circuit 914 may include a mixer, a filter, an amplifier, or the like and transmits and receives radio signals through each antenna 916. The radio communication interface 912 may be a one-chip module on which the BB processor 913 and the RF circuit 914 are integrated. The radio communication interface 912 may include a plurality of the BB processors 913 and a plurality of the RF circuits 914 as illustrated in FIG. 24. FIG. 24 illustrates the example in which the radio communication interface 912 includes the plurality of BB processors 913 and the plurality of RF circuits 914, but the radio communication interface 912 may include one BB processor 913 or one RF circuit 914.

In addition, the radio communication interface 912 may support a radio communication scheme of another kind, such as a short-distance wireless communication scheme, a near-field wireless communication scheme, or a wireless local area network (LAN) scheme in addition to the cellular communication scheme, and in this case, may include the BB processor 913 and the RF circuit 914 for each radio communication scheme.

Each antenna switch 915 switches the connection destination of the corresponding antenna 916 among a plurality of circuits (for example, circuits for different radio communication schemes) included in the radio communication interface 912.

Each antenna 916 includes one or a plurality of antenna elements (for example, a plurality of antenna elements forming a MIMO antenna) and is used to transmit and receive radio signals by the radio communication interface 912. The smartphone 900 may include a plurality of the antennas 916 as illustrated in FIG. 24. FIG. 24 illustrates the example in which the smartphone 900 includes the plurality of antennas 916, but the smartphone 900 may include one antenna 916.

In addition, the smartphone 900 may include the antenna 916 for each radio communication scheme. In this case, the antenna switch 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 with one another. The battery 918 supplies electrical power to each block of the smartphone 900 illustrated in FIG. 24 through a power supply line partially illustrated with a dashed line in the drawing. For example, the auxiliary controller 919 operates minimum necessary functions of the smartphone 900 in a sleep mode.

In the smartphone 900 illustrated in FIG. 24, one or more components (the slice processing unit 241 and/or the communication control unit 243) included in the processing unit 240 described with reference to FIG. 10 may be implemented on the radio communication interface 912. Alternatively, at least some of the components may be implemented on the processor 901 or the auxiliary controller 919. As an example, a module including part (for example, the BB processor 913) or all of the radio communication interface 912, the processor 901, and/or the auxiliary controller 919 may be mounted on the smartphone 900, and the above-described one or more components may be implemented on the module. In this case, the above-described module may store a computer program for causing the processor to function as the above-described one or more components (in other words, a computer program for causing the processor to execute operation of the above-described one or more components) and may execute the computer program. As another example, the computer program for causing the processor to function as the above-described one or more components may be installed on the smartphone 900 and executed by the radio communication interface 912 (for example, the BB processor 913), the processor 901, and/or the auxiliary controller 919. As described above, the smartphone 900 or the above-described module may be provided as a device including the above-described one or more components, or the computer program for causing the processor to function as the above-described one or more components may be provided. Alternatively, a readable recording medium in which the above-described computer program is recorded may be provided.

In the smartphone 900 illustrated in FIG. 24, for example, the radio communication unit 220 described with reference to FIG. 10 may be implemented on the radio communication interface 912 (for example, the RF circuit 914). The antenna unit 210 may be implemented on each antenna 916. The storage unit 230 may be implemented on the memory 902.

(Second exemplary application)

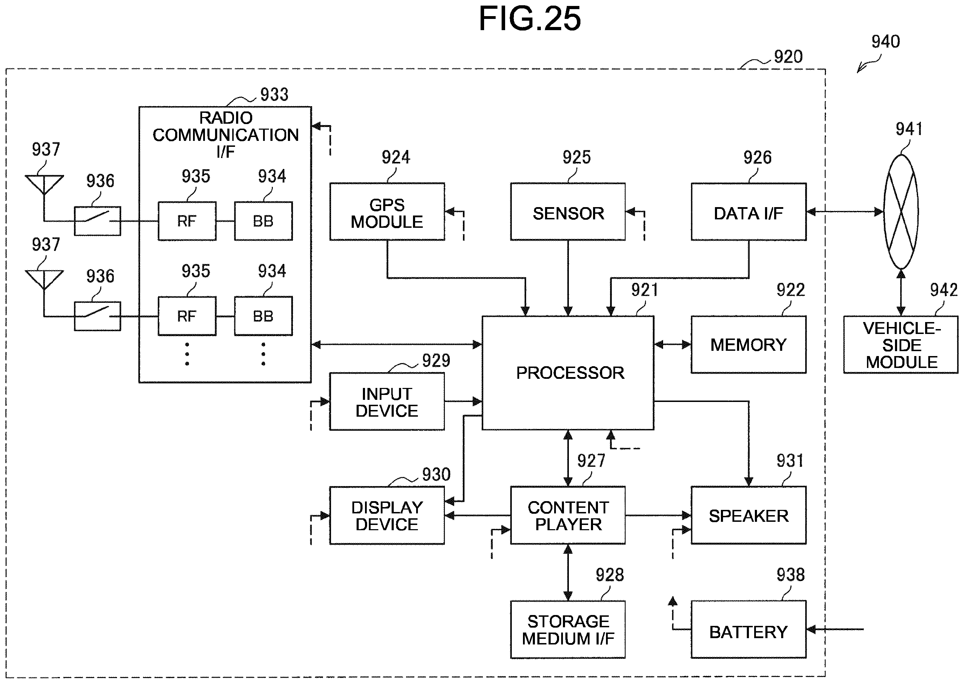

FIG. 25 is a block diagram illustrating an exemplary schematic configuration of a car navigation device 920 to which the technology according to the present disclosure is applicable. The car navigation device 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antennas switch 936, one or more antennas 937, and a battery 938.

The processor 921 may be, for example, a CPU or a SoC, and controls a navigation function and other functions of the car navigation device 920. The memory 922 includes a RAM and a ROM and stores computer programs executed by the processor 921 and data.

The GPS module 924 measures the position (for example, latitude, longitude, and altitude) of the car navigation device 920 by using GPS signals received from GPS satellites. The sensor 925 may include sensors such as a gyro sensor, a geomagnetic sensor, and an atmospheric pressure sensor. The data interface 926 is connected with an on-board network 941 through, for example, a terminal (not illustrated) and acquires data generated on a vehicle side, such as vehicle speed data.

The content player 927 plays back contents stored in a storage medium (for example, CD or DVD) inserted into the storage medium interface 928. The input device 929 includes, for example, a touch sensor configured to detect a touch on a screen of the display device 930, a button, or a switch and receives an operation or information input from a user. The display device 930 includes a screen such as an LCD or an OLED display and displays an image of the navigation function or a content being played back. The speaker 931 outputs sound of the navigation function or a content being played back.

The radio communication interface 933 supports a cellular communication scheme such as LTE or LTE-Advanced and executes radio communication. The radio communication interface 933 may typically include a BB processor 934 and an RF circuit 935. The BB processor 934 may perform, for example, encoding/decoding, modulation/demodulation, and multiplexing/demultiplexing and executes various kinds of signal processing for radio communication. The RF circuit 935 may include a mixer, a filter, an amplifier, or the like and transmits and receives radio signals through each antenna 937. The radio communication interface 933 may be a one-chip module on which the BB processor 934 and the RF circuit 935 are integrated. The radio communication interface 933 may include a plurality of the BB processors 934 and a plurality of the RF circuits 935 as illustrated in FIG. 25. FIG. 25 illustrates the example in which the radio communication interface 933 includes the plurality of BB processors 934 and the plurality of RF circuits 935, but the radio communication interface 933 may include one BB processor 934 or one RF circuit 935.

In addition, the radio communication interface 933 may support a radio communication scheme of another kind, such as the short-distance wireless communication scheme, the near-field wireless communication scheme, or the wireless LAN scheme in addition to the cellular communication scheme, and in this case, may include the BB processor 934 and the RF circuit 935 for each radio communication scheme.

Each antenna switch 936 switches the connection destination of the corresponding antenna 937 among a plurality of circuits (for example, circuits for different radio communication schemes) included in the radio communication interface 933.

Each antenna 937 includes one or a plurality of antenna elements (for example, a plurality of antenna elements forming a MIMO antenna) and is used to transmit and receive radio signals by the radio communication interface 933. The car navigation device 920 may include a plurality of the antennas 937 as illustrated in FIG. 25. FIG. 25 illustrates the example in which the car navigation device 920 includes the plurality of antennas 937, but the car navigation device 920 may include one antenna 937.

In addition, the car navigation device 920 may include the antenna 937 for each radio communication scheme. In this case, the antenna switch 936 may be omitted from the configuration of the car navigation device 920.

The battery 938 supplies electrical power to each block of the car navigation device 920 illustrated in FIG. 25 through a power supply line partially illustrated with a dashed line in the drawing. In addition, the battery 938 is charged with electrical power supplied from the vehicle side.

In the car navigation device 920 illustrated in FIG. 25, one or more components (the slice processing unit 241 and/or the communication control unit 243) included in the processing unit 240 described with reference to FIG. 10 may be implemented on the radio communication interface 933. Alternatively, at least some of the components may be implemented on the processor 921. As an example, a module including part (for example, the BB processor 934) or all of the radio communication interface 933 and/or the processor 921 may be mounted on the car navigation device 920, and the above-described one or more components may be implemented on the module. In this case, the above-described module may store a computer program for causing the processor to function as the above-described one or more components (in other words, a computer program for causing the processor to execute operation of the above-described one or more components) and may execute the computer program. As another example, the computer program for causing the processor to function as the above-described one or more components may be installed on the car navigation device 920 and executed by the radio communication interface 933 (for example, the BB processor 934) and/or the processor 921. As described above, the car navigation device 920 or the above-described module may be provided as a device including the above-described one or more components, or the computer program for causing the processor to function as the above-described one or more components may be provided. Alternatively, a readable recording medium in which the above-described computer program is recorded may be provided.

In the car navigation device 920 illustrated in FIG. 25, for example, the radio communication unit 220 described with reference to FIG. 10 may be implemented on the radio communication interface 933 (for example, the RF circuit 935). The antenna unit 210 may be implemented on each antenna 937. The storage unit 230 may be implemented on the memory 922.

In addition, the technology according to the present disclosure may be achieved as an on-board system (or vehicle) 940 including at least one block of the car navigation device 920 described above, the on-board network 941, and a vehicle side module 942. The vehicle side module 942 generates vehicle-side data such as the vehicle speed, the engine rotation speed, or failure information and outputs the generated data to the on-board network 941.

<<5. Conclusion>>

The embodiment of the present disclosure is described above in detail with reference to FIGS. 1 to 25. As described above, the base station 100 according to the present embodiment provides a plurality of slices. Then, the base station 100 transmits the capability information related to provision of a slice having assured isolation to the terminal device 200. Accordingly, the terminal device 200 can know whether the base station 100 can provide a slice having assured isolation. Thus, the terminal device 200 can perform communication with slice isolation taken into consideration, for example, by requesting the base station 100 to provide a slice having assured isolation, or by selecting, as a connection destination, the base station 100 that can provide a slice having assured isolation.

In addition, the base station 100 according to the present embodiment determines the schedule of radio resource allocation to slices, allocates radio resources to the slices in accordance with the allocation schedule, and transmits the allocation schedule information to the terminal device 200. The allocation schedule is quasi-statically determined, and thus the radio resources allocated to the slices are quasi-statically determined as well. Thus, the radio resources allocated to the slices do not vary with a dynamic event such as traffic increase and decrease, which assures isolation of the slices.

When a plurality of slices are multiplexed by the TDM scheme, the base station 100 assures slice isolation by allocating different radio resources to the plurality of respective slices. When a plurality of slices are multiplexed by the FDM scheme, the base station 100 assures slice isolation by setting appropriate maximum transmission power to each slice. In this manner, the system 1 according to the present embodiment can apply slices having assured isolation in the RAN. Thus, in the system 1, a plurality of logical networks that are not affected by each other can coexist in one physical network. As a result, facility installation cost and operating cost in the system 1 can be reduced.

Preferable embodiments of the present disclosure are described above in detail with reference to the accompanying drawings, but the technical scope of the present disclosure is not limited to such examples. Various changes and modifications could be thought of by a person having typical knowledge in the technical field of the present disclosure within the range of the technical idea written in the claims, and it should be understood that these changes and modifications belong to the technical scope of the present disclosure.

Each processing described with reference to a flowchart or a sequence diagram in the present specification does not necessarily need to be executed in the illustrated order. Some processing steps may be executed in parallel. An additional processing step may be employed, and a certain processing step may be omitted.

Effects stated in the present specification are explanatory or exemplary but not restrictive. Thus, the technology according to the present disclosure achieves, together with or in place of the above-described effects, any other effect that is obvious to the skilled person in the art from description of the present specification.

Configurations as described below belong to the technical scope of the present disclosure.

(1) A base station configured to provide a plurality of slices, the base station comprising a control unit configured to transmit, to a terminal device, capability information related to provision of a slice having assured isolation.

(2) The base station according to (1), wherein the control unit transmits, to the terminal device, information indicating a schedule of radio resource allocation to the slice unique to a cell.

(3) The base station according to (2), wherein the information indicating the schedule of allocation includes information indicating the position of a sub frame scheduled to be allocated to each slice and information indicating a duration in which the information indicating the position of the sub frame scheduled to be allocated is valid.

(4) The base station according to (2), wherein the information indicating the schedule of allocation includes, for each slice, information indicating the schedule of allocation of a set of radio frames.

(5) The base station according to (4), wherein the information indicating the schedule of allocation includes, for each slice, information indicating the schedule of allocation of each sub frames in a radio frame scheduled to be allocated.

(6) The base station according to (5), wherein the information indicating the schedule of allocation includes information indicating an adjustment rule when a sub frame scheduled to be allocated is duplicated between different slices.

(7) The base station according to (6), wherein the adjustment rule is based on the length of the period of allocation of a set of radio frames.

(8) The base station according to (6), wherein the adjustment rule is based on a priority set to each slice in advance.

(9) The base station according to any one of (1) to (8), wherein, before switching a schedule of radio resource allocation to the slices, the control unit transmits the information indicating the schedule of allocation after the switching to the terminal device.

(10) The base station according to any one of (1) to (9), wherein a minimum unit of radio resources allocated to the slice in a time direction is a sub frame.

(11) The base station according to any one of (1) to (10), wherein the control unit determines whether to permit the terminal device to use a new slice based on first residual transmission power obtained by subtracting the sum of maximum transmission power set for each of the one or more slices used by the terminal device from maximum transmission power for the terminal device.

(12) The base station according to any one of (1) to (11), wherein the control unit schedules uplink transmission by the terminal device based on second residual transmission power obtained for each slice used by the terminal device by subtracting transmission power being used from set maximum transmission power in the terminal device.

(13) The base station according to any one of (1) to (12), wherein the plurality of slices provided by the base station are operated by different operators.

(14) A terminal device comprising a control unit configured to request a base station to provide a slice having assured isolation, the base station being configured to provide a plurality of slices.

(15) The terminal device according to (14), wherein the control unit reports, to the base station, first residual transmission power obtained by subtracting the sum of maximum transmission power set for each slice used by the terminal device from maximum transmission power for the terminal device.

(16) The terminal device according to (14) or (15), wherein the control unit reports, to the base station, second residual transmission power obtained for each slice used by the terminal device by subtracting transmission power being used from set maximum transmission power.

(17) The terminal device according to any one of (14) to (16), wherein the control unit sets maximum transmission power for each of the one or more slices used by the terminal device so that the sum of the maximum transmission power for each slice does not exceed maximum transmission power for the terminal device.

(18) The terminal device according to any one of (14) to (16), wherein the control unit sets maximum transmission power for a group including a plurality of the slices.

(19) The terminal device according to (18), wherein the control unit sets the maximum transmission power for each slice not belonging to the group among a plurality of the slices used by the terminal device and the maximum transmission power for the group so that the sum of the maximum transmission power for each slice not belonging to the group and the maximum transmission power for the group does not exceed maximum transmission power for the terminal device.

(20) A method executed by a base station configured to provide a plurality of slices, the method comprising transmitting, to a terminal device, capability information related to provision of a slice having assured isolation.

(21) A method executed by a processor, the method comprising requesting a base station to provide a slice having assured isolation, the base station being configured to provide a plurality of slices.

(22) A recording medium in which a computer program for causing a computer to function as a control unit configured to transmit, to a terminal device, capability information related to provision of a slice having assured isolation is recorded, the computer being configured to control a base station configured to provide a plurality of slices.

(23) A recording medium in which a computer program for causing a computer to function as a control unit configured to request a base station to provide a slice having assured isolation is recorded, the base station being configured to provide a plurality of slices.

Reference Signs List

| 1 | system |
| 11 | cell |
| 20 | core network |
| 30 | PDN |
| 100 | base station |
| 110 | antenna unit |
| 120 | radio communication unit |
| 130 | network communication unit |
| 140 | storage unit |
| 150 | processing unit |
| 151 | slice processing unit |
| 153 | communication control unit |
| 200 | terminal device |

210     antenna unit
220     radio communication unit
230     storage unit
240     processing unit
241     slice processing unit
243     communication control unit


**Claims**

1.  A base station configured to provide a plurality of slices, the base station comprising a control unit configured to transmit, to a terminal device, capability information related to provision of a slice having assured isolation.

2.  The base station according to claim 1, wherein the control unit transmits, to the terminal device, information indicating a schedule of radio resource allocation to the slice unique to a cell.

3.  The base station according to claim 2, wherein the information indicating the schedule of allocation includes information indicating the position of a sub frame scheduled to be allocated to each slice and information indicating a duration in which the information indicating the position of the sub frame scheduled to be allocated is valid.

4.  The base station according to claim 2, wherein the information indicating the schedule of allocation includes, for each slice, information indicating the schedule of allocation of a set of radio frames.

5.  The base station according to claim 4, wherein the information indicating the schedule of allocation includes, for each slice, information indicating the schedule of allocation of each sub frames in a radio frame scheduled to be allocated.

6.  The base station according to claim 5, wherein the information indicating the schedule of allocation includes information indicating an adjustment rule when a sub frame scheduled to be allocated is duplicated between different slices.

7.  The base station according to claim 6, wherein the adjustment rule is based on the length of the period of allocation of a set of radio frames.

8.  The base station according to claim 6, wherein the adjustment rule is based on a priority set to each slice in advance.

9.  The base station according to claim 1, wherein, before switching a schedule of radio resource allocation to the slices, the control unit transmits the information indicating the schedule of allocation after the switching to the terminal device.

10. The base station according to claim 1, wherein a minimum unit of radio resources allocated to the slice in a time direction is a sub frame.

11. The base station according to claim 1, wherein the control unit determines whether to permit the terminal device to use a new slice based on first residual transmission power obtained by subtracting the sum of maximum transmission power set for each of the one or more slices used by the terminal device from maximum transmission power for the terminal device.

12. The base station according to claim 1, wherein the control unit schedules uplink transmission by the terminal device based on second residual transmission power obtained for each slice used by the terminal device by subtracting transmission power being used from set maximum transmission power in the terminal device.

13. The base station according to claim 1, wherein the plurality of slices provided by the base station are operated by different operators.

14. A terminal device comprising a control unit configured to request a base station to provide a slice having assured isolation, the base station being configured to provide a plurality of slices.

15. The terminal device according to claim 14, wherein the control unit reports, to the base station, first residual transmission power obtained by subtracting the sum of maximum transmission power set for each slice used by the terminal device from maximum transmission power for the terminal device.

16. The terminal device according to claim 14, wherein the control unit reports, to the base station, second residual transmission power obtained for each slice used by the terminal device by subtracting transmission power being used from set maximum transmission power.

17. The terminal device according to claim 14, wherein the control unit sets maximum transmission power for each of the one or more slices used by the terminal device so that the sum of the maximum transmission power for each slice does not exceed maximum transmission power for the terminal device.

18. The terminal device according to claim 14, wherein the control unit sets maximum transmission power for a group including a plurality of the slices.

19. The terminal device according to claim 18, wherein the control unit sets the maximum transmission power for each slice not belonging to the group among a plurality of the slices used by the terminal device and the maximum transmission power for the group so that the sum of the maximum transmission power for each slice not belonging to the group and the maximum transmission power for the group does not exceed maximum transmission power for the terminal device.

20. A method executed by a base station configured to provide a plurality of slices, the method comprising transmitting, to a terminal device, capability information related to provision of a slice having assured isolation.

21. A method executed by a processor, the method comprising requesting a base station to provide a slice having assured isolation, the base station being configured to provide a plurality of slices.

22. A recording medium in which a computer program for causing a computer to function as a control unit configured to transmit, to a terminal device, capability information related to provision of a slice having assured isolation is recorded, the computer being configured to control a base station configured to provide a plurality of slices.

23. A recording medium in which a computer program for causing a computer to function as a control unit configured to request a base station to provide a slice having assured isolation is recorded, the base station being configured to provide a plurality of slices.

# FIG.1

EP 3 739 960 A1

# FIG.2

EP 3 739 960 A1

# FIG.3

New Core C-Plane

New Core U-Plane

PDN

C-Plane entity

U-Plane entity

NR
(New Radio Access Network)

New CN
(New Core Network)

# FIG.4

Core Network for e.g. Low Latency

Core Network for e.g. Machine Type Communication

Core Network for e.g. Device to Device

Network Slicing

Network Function Virtualization

Open Flow Switch

# FIG.5

| Slice U1 | | Slice B1 | | Slice C1 |
| Slice U2 | | Slice B2 | | Slice C2 |
| | | Slice B3 | | Slice C3 |
| | | Slice B4 | | |

←———————————————— RAN Slice ————————————————→   ←——— Core Network Slice ———→

←—— UE Slice ——→   ←—— Base Station Slice ——→

EP 3 739 960 A1

# FIG.6

Slice#1

QoS=1

Beare#1(QoS=1, UE#1)

Beare#2(QoS=1, UE#2)

Beare#3(QoS=1, UE#3)

QoS=2

Beare#4(QoS=2, UE#1)

Beare#5(QoS=2, UE#2)

Beare#6(QoS=2, UE#3)

# FIG.7

1 radio frame

Sub Frame: #0 | #1 | #2 | #3 | #4 | #5 | #6 | #7 | #8 | #9

Slot: #0

OFDM symbol: #0 | #1 | #2 | #3 | #4 | #5 | #6 | #7 | #8 | #9 | #10 | #11 | #12 | #13

Sub carrier spacing=15kHz

EP 3 739 960 A1

# FIG.8

1 radio frame

| Sub Frame | #0 | #1 | #2 | #3 | #4 | #5 | #6 | #7 | #8 | #9 |

Slot

| #0 | #1 |

OFDM symbol

| #0 | #1 | #2 | #3 | #4 | #5 | #6 | #7 | #8 | #9 | #10 | #11 | #12 | #13 |

Sub carrier spacing=30kHz

# FIG.9

# FIG.10

# FIG.11

TERMINAL DEVICE
200

BASE STATION
100

CAPABILITY INFORMATION RELATED TO
PROVISION OF SLICE HAVING ASSURED
ISOLATION — S102

REQUEST FOR SLICE HAVING ASSURED
ISOLATION — S104

— S106

| DETERMINATION |
|---|

RESPONSE — S108

# FIG.12

Radio frame = 10ms

| System Frame Number | #0 | #1 | #2 | #3 | #4 | #5 | #6 | #7 | #8 | #9 | #10 | #11 |
|---|---|---|---|---|---|---|---|---|---|---|---|---|

| Periodicity configuration for network slice #0 | 1 | 0 | 0 | 0 | 1 | 0 | 0 | 0 | 1 | 0 | 0 | 0 |
|---|---|---|---|---|---|---|---|---|---|---|---|---|

| Periodicity configuration for network slice #1 | 1 | 0 | 1 | 0 | 1 | 0 | 1 | 0 | 1 | 0 | 1 | 0 |
|---|---|---|---|---|---|---|---|---|---|---|---|---|

EP 3 739 960 A1

# FIG.13

Radio frame = 1ms

| Sub Frame Number | #0 | #1 | #2 | #3 | #4 | #5 | #6 | #7 | #8 | #9 |
|---|---|---|---|---|---|---|---|---|---|---|

| Lookup Table for slice #0 | 1 | 0 | 0 | 0 | 1 | 0 | 0 | 1 | 0 | 0 |
|---|---|---|---|---|---|---|---|---|---|---|

| Lookup Table for slice #1 | 0 | 0 | 1 | 1 | 1 | 0 | 0 | 0 | 0 | 0 |
|---|---|---|---|---|---|---|---|---|---|---|

# FIG.14

High priority

| |
|---|
| Slice #4 |
| Slice #0 |
| Slice #3 |
| Slice #2 |
| Slice #1 |

Low priority

Priority rule in case of sub frame collision

# FIG.15

EP 3 739 960 A1

# FIG.16

EP 3 739 960 A1

# FIG.17

TERMINAL DEVICE
200

BASE STATION
100

S202

DETERMINE SCHEDULE OF
RADIO RESOURCE ALLOCATION
TO SLICES

ALLOCATION SCHEDULE INFORMATION          S204

S206

ALLOCATE RADIO RESOURCES
TO SLICES IN ACCORDANCE
WITH ALLOCATION SCHEDULE

PERFORM COMMUNICATION BY USING
RESOURCES SCHEDULED TO BE
ALLOCATED TO RESPECTIVE SLICES          S208

# FIG.18

EP 3 739 960 A1

# FIG.19

TERMINAL DEVICE
200

BASE STATION
100

REQUEST FOR USE PERMISSION OF
NEW SLICE ........ S302

REQUEST FOR REPORTING OF FIRST
RESIDUAL TRANSMISSION POWER ........ S304

REPORT FIRST RESIDUAL
TRANSMISSION POWER ........ S306

........ S308

DETERMINE WHETHER TO
PERMIT USE OF NEW
SLICE

RESPONSE TO REQUEST FOR USE
PERMISSION OF NEW SLICE ........ S310

# FIG.20

TERMINAL DEVICE
200

BASE STATION
100

CONFIGURATION OF REPORTING
PERIOD OF SECOND RESIDUAL
TRANSMISSION POWER ........ S402

REPORT SECOND RESIDUAL
TRANSMISSION POWER FOR SLICE #1 ........ S404A

REPORT SECOND RESIDUAL
TRANSMISSION POWER FOR SLICE #2 ........ S404B

REPORTING
PERIOD

REPORT SECOND RESIDUAL
TRANSMISSION POWER FOR SLICE #1 ........ S406A

REPORT SECOND RESIDUAL
TRANSMISSION POWER FOR SLICE #2 ........ S406B

# FIG.21

Max Power for non-isolated slice group

⬇

Max Power
for isolated
slice#4

⬇

Max Power
for isolated
slice#5

⬇

| non-isolated slice group | | |
|---|---|---|
| Slice#1 | Slice#2 | Slice#3 |

| Slice#4 |
|---|

| Slice#5 |
|---|

EP 3 739 960 A1

# FIG.22

# FIG.23

# FIG.24

EP 3 739 960 A1

# FIG.25

EP 3 739 960 A1

## INTERNATIONAL SEARCH REPORT

| | International application No. |
|---|---|
| | PCT/JP2018/045177 |

**A. CLASSIFICATION OF SUBJECT MATTER**
Int.Cl. H04W48/08(2009.01)i, H04L12/70(2013.01)i, H04W48/18(2009.01)i,
H04W52/30(2009.01)i

According to International Patent Classification (IPC) or to both national classification and IPC

**B. FIELDS SEARCHED**

Minimum documentation searched (classification system followed by classification symbols)
Int.Cl. H04W48/08, H04L12/70, H04W48/18, H04W52/30

Documentation searched other than minimum documentation to the extent that such documents are included in the fields searched
Published examined utility model applications of Japan 1922-1996
Published unexamined utility model applications of Japan 1971-2019
Registered utility model specifications of Japan 1996-2019
Published registered utility model applications of Japan 1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/175715 A1 (SHARP CORPORATION) 12 October | 1, 13, 14, 20- |
|  | 2017, paragraphs [0039], [0095]-[0097], [0237]- | 23 |
| Y | [0251], [0256]-[0260] | 2-5, 10 |
| A | & CN 108886758 A | 6-9, 11, 12, |
|  |  | 15-19 |
| X | HUAWEI, HISILICON, What is RAN part of a network | 1, 13, 20, 22 |
| Y | slice? [online], 3GPP TSG RAN WG2 #100 R2-1712389, | 2-5, 10 |
| A | 01 December 2017, section 3 | 6-9, 11, 12, |
|  |  | 14-19, 23 |

☒ Further documents are listed in the continuation of Box C. ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 15.02.2019 | 26.02.2019 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2018/045177

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | QUALCOMM INCORPORATED, Slice isolation in RAN [online], 3GPP TSG RAN WG3 #94 R3-162828, 18 November 2016, fig. 2, 3 | 2-5, 10<br>1, 6-9, 11-23 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017200172 A